(19) Europäisches Patentamt / European Patent Office / Office européen des brevets

(11) **EP 3 427 112 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(51) Int Cl.:
*G05B 19/409* *(2006.01)*    *G05B 19/423* *(2006.01)*
*B25J 13/06* *(2006.01)*    *B25J 9/16* *(2006.01)*

(21) Anmeldenummer: **17717062.8**

(86) Internationale Anmeldenummer:
**PCT/AT2017/060058**

(22) Anmeldetag: **07.03.2017**

(87) Internationale Veröffentlichungsnummer:
**WO 2017/152208 (14.09.2017 Gazette 2017/37)**

(54) **SYSTEM UND VERFAHREN ZUR RÄUMLICHEN BEWEGUNG EINES OBJEKTS MITTELS EINES MANIPULATORS**

SYSTEM AND METHOD FOR SPATIALLY MOVING AN OBJECT BY MEANS OF A MANIPULATOR

SYSTÈME ET PROCÉDÉ DE DÉPLACEMENT DANS L'ESPACE D'UN OBJET AU MOYEN D'UN MANIPULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2016 AT 501842016**

(43) Veröffentlichungstag der Anmeldung:
**16.01.2019 Patentblatt 2019/03**

(73) Patentinhaber: **KEBA AG**
**4041 Linz (AT)**

(72) Erfinder: **MITTERMAYER, Christoph**
**3400 Weidling/Klosterneuburg (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
EP-A1- 2 194 434    EP-A1- 2 580 027
EP-A2- 1 525 954    DE-A1-102014 004 919

**Beschreibung**

Die Erfindung betrifft ein System zur räumlichen Bewegung eines Objekts mittels einem Manipulator, insbesondere mittels einem Industrieroboter, sowie ein Verfahren zum Betreiben eines durch eine elektronische Steuervorrichtung gesteuerten Manipulators, welcher Manipulator für die räumliche Bewegung eines Objekts vorgesehen ist.

Die angegebene Erfindung kann vor allem im Umfeld der roboter- bzw. antriebsunterstützten Montage ihre Anwendung finden. Überall dort, wo elektrisch gesteuerte Hebevorrichtungen für das Bewegen, Fügen und Montieren großer und teils schwerer Bauteile zum Einsatz kommen, beispielsweise bei der teilautomatisierten Fertigung von Fahrzeugen oder dergleichen, kann das erfindungsgemäße System und Verfahren vorteilhaft angewandt werden.

Während Industrieroboter im Bereich der Serienfertigung von Fahrzeugen vielfältige Bearbeitungs- und Montagevorgänge autonom, das heißt ohne weitere Beteiligung von Personen durchführen können, gibt es im Bereich der Endfertigung und beim Zusammenfügen von größeren Bauteilen auch Fälle, wo es auf ein exaktes Positionieren bzw. auf ein genaues Einfädeln und auf das Berücksichtigen von Toleranzen und Nachgiebigkeiten ankommt. Vor allem bei systembedingten, sporadisch auftretenden Toleranzen kommen vollautomatische Systeme rasch an ihre Grenzen. Insbesondere gibt es Montage- bzw. Fügeprozesse, bei welchen eine genaue visuelle Kontrolle und eine Leitung bzw. Beeinflussung des Prozesses durch einen Menschen entscheidend ist. Dazu ist es erforderlich, dass die Bedienperson das anzufügende Bauteil in mehreren Dimensionen frei bewegen kann, wobei aber das Gewicht des Bauteils aus Gründen der Ergonomie größtenteils durch technische Hilfsmittel getragen bzw. bewegt werden soll, so dass der Monteur das Bauteil mit vergleichsweise geringem Kraftaufwand handhaben kann. Bisher wurden zu diesem Zweck mitunter Hebezeuge eingesetzt, die nur die vertikale Kraftkomponente zufolge des Gewichts eines Bauteils überwiegend oder gänzlich kompensieren konnten und die Bewegung in allen anderen Dimensionen alleine durch die Kraft des Monteurs erfolgt ist. Es gibt auch Handlingvorrichtungen, insbesondere Krananlagen, die eine antriebsunterstützte Handhabung von Werkstücken für deren Bewegung in allen anderen Dimensionen ermöglichen.

Die Bauteile selbst, beispielsweise Windschutzscheiben, Fahrzeugsitze, Motoren etc., werden häufig von speziellen Haltevorrichtungen aufgenommen, welche Haltevorrichtungen an einem Ausleger oder Roboterarm befestigt bzw. mit diesem koppelbar sind. Im Falle von Robotern sind beispielsweise direkt an vorgegebenen Stellen an der Haltevorrichtung diverse Bedienelemente angeordnet, mit denen die Verfahrrichtung der Haltevorrichtung durch die Bedienperson vorgegeben werden kann.

Die EP1525954A2 beschreibt ein Verfahren und eine Vorrichtung zum möglichst genauen Positionieren von zumindest einem Teil eines Industrieroboters, insbesondere eines Werkzeugs eines Mehrachs-Industrieroboters, in einem Zielpunkt bzw. an einer Sollposition. Eine Ist-Position bzw. sich zeitlich verändernde Ist-Positionen aufgrund einer steuerungstechnisch ausgeführten Bewegung des Industrieroboters werden dabei mittels eines Inertialmesssystems bestimmt. Mittels dem Inertialmesssystem detektierte Positionsabweichungen des Industrieroboters von der Sollposition werden in weitere Folge für eine steuerungstechnische Bewegungskorrektur des Industrieroboters herangezogen. Das Inertialmesssystem ist dabei permanent und fest mit einem gesteuert beweglichen Teil des Industrieroboters verbunden, insbesondere möglichst starr und nahe zu dessen TCP (Tool Center Point) angeordnet. Zur Kalibrierung des Inertialmesssystems auf dem Industrieroboter wird dieses via den Industrieroboter zu einem bekannten Zielpunkt im Raum bewegt. Alternativ oder in Kombination dazu kann die Kalibrierung des Inertialmesssystems mittels eines externen Messsystems erfolgen. Um die unvermeidbare, zeitliche Drift der Inertialsensoren des Inertialmesssystems zu kompensieren, wird das Inertialsystem wiederholt abgeglichen bzw. kalibriert. Nachdem die Sensordaten des Inertialmesssystems von der Steuerung des Industrieroboters direkt verarbeitet und in die Bewegungssteuerung des Industrieroboters einfließen, kann eine hochgenaue, insbesondere eine automatisch geregelte Positionierung des Industrieroboters bzw. seines TCP im gewünschten Ziel- bzw. Sollpunkt erreicht werden.

Die EP2194434A1 betrifft ein Steuerungssystem für Industrieroboter, bei welchem an Teilen des Industrieroboters oder an dessen Werkzeug ein manuell bedienbares Bewegungsvorgabemittel angebracht werden kann. Das am Industrieroboter bedarfsweise montier- und demontierbare Bewegungsvorgabemittel, welches in Art eines Joystick ausgeführt sein kann, steht mit einem von einer Bedienperson tragbaren Handbediengerät in funktechnischer Wirkverbindung. Die ausgehend von den am Bewegungsvorgabemittel eingeleiteten Bewegungssteuerbefehle werden via das Handbediengerät an die stationäre Steuervorrichtung des Industrieroboters übertragen, welche Steuervorrichtung den Industrieroboter unter Berücksichtigung dieser Bewegungssteuerbefehle ansteuert. Im Handbediengerät kann dabei eine Abgleichsprozedur implementiert sein, wobei die Bedienperson über den Bildschirm des Handbediengerätes angeleitet wird, um das Koordinatensystem des Werkzeuges bzw. Endeffektors des Industrieroboters mit dem Weltkoordinatensystem des Industrieroboters abzugleichen. Dabei wird die Bedienperson via den Bildschirm des Handbediengerätes instruiert, in welcher Richtung das Bewegungsvorgabemittel am Endeffektor oder an einem sonstigen Teil des Industrieroboters auszurichten und anzubringen ist.

Die EP2580027A1 bzw. WO2011/153569A1 betrifft ein Verfahren zum Programmieren oder Vorgeben von Bewegungen oder Abläufen eines Industrieroboters oder einer sonstigen mehrachsig steuerbaren Handhabungsvorrichtung. Dabei werden über ein von einer Bedienperson händisch zu führendes Bewegungsvorgabemittel zumindest ein Teil der Daten und Steuerbefehle für die Bewegungssteuerung oder Ablaufprogrammierung des Industrieroboters generiert. Diese Steuerbefehle werden dann vom Industrieroboter im Wesentlichen unverzögert umgesetzt. Wesentlich ist dabei, dass aus der Bewegungsvorgabe durch das händisch zu führende Bewegungsvorgabemittel und/oder aus sensorisch erfassten Messwerten der vom Industrieroboter ausgeführten Bewegung und/oder aus den vom Steuerungssystem generierten Steuerbefehlen eine Bewegungskenngröße ermittelt und mit einem oberen Grenzwert verglichen wird, und dass bei einem Überschreiten des oberen Grenzwertes die Bewegung oder Ablaufveränderung des Industrieroboters umgehend oder nach einer definiert begrenzten Nachlaufphase gestoppt wird. Alternativ oder in Kombination dazu kann vorgesehen sein, dass bei definierter Annäherung der Bewegungskenngröße an den oberen Grenzwert oder bei einem Überschreiten eines unteren Grenzwertes, welcher niedriger als der obere Grenzwert ist, der Bedienperson die Nähe oder Annäherung zum oberen Grenzwert durch Abgabe eines Warnsignals signalisiert wird. Dadurch kann ein unerwünschtes Auseinanderdriften zwischen der Bewegungsvorgabe der Bedienperson und der Bewegungsausführung durch den Industrieroboters hintan gehalten werden bzw. können die mit einem Auseinanderdriften zwischen der Wunsch- bzw. Vorgabe-Bewegung und der Ist-Bewegung einhergehenden Gefahren und Probleme reduziert werden.

Entsprechend einer bekannten Ausführung kann auch ein elektronisches Bewegungsvorgabemittel, beispielsweise in der Art eines Griffes, vorgesehen sein, wie dies in der DE102009012219A beschrieben ist. Dieser Griff kann dabei mittels bedarfsweise lösbarer Befestigungsmittel an einer für den Monteur in der jeweiligen Situation angenehmen Position am Werkstück angebracht werden. Der entsprechende Griff weist ein in der Regel mehrdimensional wirkendes Bedienelement bzw. einen mehrdimensional erfassenden Kraft-/Momentensensor auf, welches bzw. welchen der Monteur für die Abgabe von Verfahrkommandos in Richtung der jeweils gewünschten Verfahr- oder Drehrichtung betätigt. Da der Griff an verschiedenen Positionen und auch in verschiedenen Ausrichtungen in Bezug auf das Werkstück und in Bezug auf das Weltkoordinatensystem des Roboters angebracht werden kann, muss zumindest die Orientierung des Griffs gegenüber dem Weltkoordinatensystem des Roboters bekannt sein, damit die Betätigungsrichtung des Bedienelementes, welche zunächst mit Bezug auf ein lokales Koordinatensystem des Bewegungsvorgabemittels erfasst wird, in die entsprechende Richtung mit Bezug auf das Weltkoordinatensystem übersetzt werden kann. Für den Zweck der Erfassung der Orientierung des Griffs am Bauteil offenbart die DE102009012219A1 die Verwendung von Schwerkraft- oder Beschleunigungssensoren.

Bei der vorbekannten Ausführung gemäß der DE102009012219A1 ist unberücksichtigt geblieben, dass über die Beschleunigungssensoren die Position und die Orientierung des Griffes im Raum nicht unmittelbar ermittelt werden kann, sondern nur ausgehend von einer bekannten Referenzlage eruiert werden kann. Zudem müssen die zu den jeweiligen Zeitpunkten vorliegenden Positionen und Orientierungen des Griffes durch fortlaufende Integration der zeitdiskret bereitgestellten Sensorsignale ermittelt werden, wobei sich die Sensorsignale infolge der Bewegungsausführungen jeweils verändern. Weiters sind solche Sensorsignale mit Fehlern, insbesondere mit zufälligen oder systematischen Fehlern behaftet, die sich durch die Integration im Laufe der Zeit aufsummieren und allmählich zu immer größeren Abweichungen zwischen der berechneten und der tatsächlichen Position und Orientierung führen. Bei der Vorrichtung gemäß der DE102009012219A1 wird also in regelmäßigen Abständen bzw. in unvorhersehbar variierenden Zeitspannen eine Neukalibrierung der Vorrichtung erforderlich sein. Dabei muss die tatsächlich vorliegende Lage des Griffes im Raum durch Einnehmen und Bestätigen einer bekannten Referenzlage ermittelt werden. Die Zeitabstände für eine solche Neukalibrierung liegen in Bezug auf übliche bzw. wirtschaftlich zweckmäßige Beschleunigungssensoren derzeit in der Größenordnung von einigen Minuten, sofern man sich auf die Ermittlung der Orientierung beschränkt und eine Bestimmung der Position im Raum außer Acht gelassen wird.

Diese regelmäßigen Neu- bzw. Rekalibrierungen können zwar bei zyklischen Fertigungsprozessen mitunter in den Fertigungszyklus integriert werden, sie stellen aber trotzdem zusätzliche, unerwünschte Handlungen seitens der Bedienperson dar. Insbesondere können diese in regelmäßigen oder unregelmäßigen Zeitabständen erforderlichen Rekalibrierungen die Handhabung bzw. den Arbeitsablauf beeinträchtigen und zusätzliche Fertigungszeiten verursachen. Außerdem kann es vorkommen, dass manche Fertigungszyklen länger dauern, wodurch dann eine zwischenzeitliche Rekalibrierung erforderlich wird.

In der DE102014004919A1 ist ebenfalls ein Griff zur lösbaren Befestigung an einem Werkstück offenbart, welcher Griff für die Abgabe von Bewegungskommandos an einen Roboter vorgesehen ist, wobei die Orientierung des Griffs ebenso mittels Beschleunigungssensoren ermittelt wird und die Bewegungskommandos in Abhängigkeit von der Orientierung des Griffs die Roboterbewegungen beeinflussen. Der Vorgang der Rekalibrierung erfolgt hier durch vorgegebene bzw. bekannte Testbewegungen des Roboters, nachdem der Griff quasi unter Zwischenschaltung des Werkstücks an den Roboter gekoppelt worden ist. Während dieser kurzen Testbewegung des Roboters sprechen die Beschleunigungssensoren im Griff an. Über die von den Beschleunigungssensoren im Griff erfasste Testbewegung des Roboters wird dann auf die tatsächliche Orientierung des Bewegungsvorgabemittels in Bezug auf das Weltkoordinatensystem des Roboters Rückschluss gezogen. Anschließende Lageänderungen des Griffes werden mittels den im Griff integrierten Beschleunigungssensoren verfolgt und rechnerisch ermittelt. Das inhärente Problem der zeitlichen Drift der sensorisch und rechnerisch ermittelten Orientierung des Griffes zufolge der Sensorfehler bleibt dabei bestehen. Zudem ist beispielsweise nach einem längeren Stillstand oder nach einem länger andauernden bzw. hochdynamischen Bewegungszyklus eine erneute Kalibrierung durchzuführen. Abgesehen davon, dass die Durchführung solcher Testbewegungen zur Rekalibrierung des Gesamtsystems nicht in allen Fällen bzw. nicht mit allen Arten von Werkstücken möglich ist, insbesondere nicht bei sehr großen Komponenten oder bei sehr engen Platzverhältnissen, erfordern diese Testbewegungen einen gewissen Zeitaufwand, der die Zykluszeiten in der Serienfertigung unerwünscht verlängert.

Aufgabe der vorliegenden Erfindung war es, die Nachteile des Standes der Technik zu überwinden und eine verbesserte Vorrichtung und ein verbessertes Verfahren zur Verfügung zu stellen, mittels derer ein Benutzer in der Lage ist, eine einfache und möglichst intuitive Handführung von Manipulatoren, insbesondere von Industrierobotern, vornehmen zu können.

Diese Aufgabe wird durch ein System gemäß Anspruch 1 und ein Verfahren gemäß Anspruch 21 gelöst. Weitere Ausführungen sind in den abhängigen Ansprüchen definiert.

Ein erfindungsgemäß aufgebautes technisches System dient zur räumlichen Bewegung eines Objekts mittels einem Manipulator. Unter einem solchen Objekt sind insbesondere zu montierende Bauteile oder Werkstücke zu verstehen. Das Objekt ist dabei zumindest vorübergehend mit dem Manipulator, beispielsweise einem Industrieroboter, bewegungsgekoppelt. Das entsprechende System umfasst weiters ein Bewegungsvorgabemittel, welches von einer Bedienperson zumindest zeitweilig händisch frei im Raum bewegbar ist, und welches Bewegungsvorgabemittel zumindest zeitweilig zur körperlichen bzw. mechanischen Kopplung mit dem zu bewegenden Objekt vorgesehen ist. In seinem aktiven Kopplungszustand gegenüber dem Objekt ist das Bewegungsvorgabemittel für die Abgabe von Bewegungskommandos seitens der Bedienperson in Bezug auf eine Steuervorrichtung des Manipulators vorgesehen. Inertialsensoren im Bewegungsvorgabemittel dienen zumindest zur Erfassung von Orientierungsveränderungen des Bewegungsvorgabemittels in Bezug auf den dreidimensionalen Raum und eine Orientierungsermittlungseinheit ist zur fortlaufenden Ermittlung der wechselnden Orientierungen des Bewegungsvorgabemittels im Raum vorgesehen. Die steuerungstechnische Ausführung bzw. Umsetzung von zumindest einem der Bewegungskommandos ist dabei zumindest teilweise von den zeit- und bewegungsabhängig variierenden Orientierungen des Bewegungsvorgabemittels abhängig. Zudem ist ein elektronisches Auswertungs- bzw. Detektierungsmittel vorgesehen, welches das System in einen ersten Betriebsmodus versetzt, wenn das Bewegungsvorgabemittel händisch frei im Raum bewegt wird, und welches Detektierungsmittel das System in einen zweiten Betriebsmodus versetzt, wenn die Orientierung des Bewegungsvorgabemittels infolge mechanischer Kontaktierung bzw. Kopplung mit dem Objekt definiert ist bzw. dadurch bestimmt wird.

Im ersten Betriebsmodus berechnet dabei die Orientierungsermittlungseinheit die wechselnden Orientierungen des Bewegungsvorgabemittels basierend auf Signalen von den Inertialsensoren im Bewegungsvorgabemittel. Demgegenüber berechnet die Orientierungsermittlungseinheit im zweiten Betriebsmodus des Systems die wechselnden Orientierungen des Bewegungsvorgabemittels in definiert begrenzten Zeitabständen direkt basierend auf Informationen oder Annahmen von Seiten der Steuervorrichtung über die ihr bekannten rotatorischen Lagezustände des bewegten Manipulators respektive des damit bewegten Objekts. Im zweiten Betriebsmodus erfolgt also die Eruierung der zeitlich sich verändernden Orientierung des Bewegungsvorgabemittels, zur Berechnung der Bewegungskommandos für den Manipulator, welche Bewegungskommandos auf der Orientierung des Bewegungsvorgabemittels aufbauen bzw. davon abhängig sind, und zur letztendlichen Ansteuerung der Antriebsvorrichtungen des Manipulators zumindest in gewissen Zeitabständen ausschließlich anhand von Daten bzw. Informationen seitens der Steuervorrichtung des Manipulators. Zumindest in diesen Zeitabständen erfolgt die Orientierungsbestimmung nicht basierend auf einer fortlaufenden Summation inkrementeller kleiner Orientierungsänderungen beziehungsweise nicht basierend auf einer Integration von rotatorischen Geschwindigkeiten oder Beschleunigungen. Für eventuell implementierte Plausibilisierungs- bzw. Kontrollmaßnahmen im Steuerungsablauf kann im zweiten Betriebsmodus - gemäß praktikabler Weiterbildungen, wie sie nachfolgend beschrieben sind - eine zusätzliche Evaluierung der Signale der Inertialsensoren vorgenommen werden. Weiters kann zwischen den erwähnten Zeitabständen für beliebige andere Zeitpunkte, für welche von der Steuerung keine aktuellen Informationen über die rotatorischen Lagezustände bereitgestellt werden, die Orientierung aus zurückliegenden Werten extrapoliert und/oder basierend auf den Signalen der Inertialsensoren rechnerisch geschätzt beziehungsweise ermittelt werden.

Die Orientierungsermittlung im zweiten Betriebsmodus ist so zu verstehen, dass die wechselnden Orientierungen des Bewegungsvorgabemittels zumindest in periodischen Abständen alleinig basierend auf den rotatorischen Lageinformationen des bewegten Manipulators ermittelt werden. Das schließt trotzdem die Möglichkeit mit ein, dass zwischen diesen Aktualisierungsintervallen die Orientierung durch Extrapolation und/oder auch gestützt auf die Signale der Inertialsensoren in einem feineren zeitlichen Raster, d.h. mit einer höheren zeitlichen Auflösung, berechnet werden.

Die in dieser Beschreibung verwendeten Begriffe "Umschaltung" bzw. "Wechsel" des Betriebsmodus sind dabei als Synonym für Programmsprünge bzw. für softwaretechnische Implementierungen zu verstehen. Der Ausdruck "Betriebsmodus" stellt auch ein Synonym für Funktionsmodus bzw. Funktionsverhalten des angegebenen technischen Systems dar.

Eine wesentliche Maßnahme bei der erfindungsgemäßen Lösung liegt darin, dass eine Positionsermittlung bzw. Orientierungsbestimmung unter Einbeziehung von Beschleunigungs- bzw. Inertialsensoren nur für jene normalerweise relativ kurze Zeitspanne erfolgt, in der das Bewegungsvorgabemittel durch die Bedienperson tatsächlich händisch frei im Raum bewegt wird, also beispielsweise von einer Referenzposition mit bekannter Lage und Ausrichtung in eine für die Führung des Objekts bzw. Werkstücks günstige Position auf dem jeweiligen Werkstück bzw. Objekt verbracht wird. In der anschließenden Zeitspanne, in der dann die Lage des Bewegungsvorgabemittels durch das jeweilige Objekt gestützt bzw. festgelegt wird, über dessen Bewegungszustand anderweitig Informationen verfügbar sind, erfolgt die weitere Bestimmung der sich fortlaufend verändernden Orientierung des Bewegungsvorgabemittels direkt auf Basis der steuerungsseitigen Informationen über die rotatorischen Lagezustände dieses Objekts.

Entsprechend einer zweckmäßigen Ausführungsform kann dabei auch vorgesehen sein, dass dann, wenn das Bewegungsvorgabemittel beispielsweise ruhend abgelegt oder ruhend positioniert ist, nachdem es von der Bedienperson auf dem zu bewegenden Objekt angebracht wurde, dass die zuletzt ermittelte Orientierung des Bewegungsvorgabemittels quasi eingefroren bzw. gespeichert wird. Alternativ oder in Kombination dazu kann auch vorgesehen sein, diesen Endzustand der räumlich freien Bewegung des Bewegungsvorgabemittels durch eine spezifische Bedien- bzw. Betätigungshandlung der Bedienperson, beispielsweise durch Betätigen einer Taste, zu signalisieren. Ab jenem Zeitpunkt, ab dem das Bewegungsvorgabemittel an ein von einem Roboter zu bewegendes Objekt bzw. Werkstück gekoppelt ist, ist die weitere Bewegung dieses Objekts bzw. Werkstücks und auch des darauf befestigten Bewegungsvorgabemittels über die Achswinkelsensoren bzw. über die Stellwegsensoren und die Geometrie des Roboters bekannt bzw. von der Steuervorrichtung ermittelbar. Insbesondere kann die Steuervorrichtung mit Hilfe der gewissermaßen "eigenen" Informationen bzw. Daten die fortlaufenden Veränderungen der Orientierung des Bewegungsvorgabemittels ermitteln bzw. können die wechselnden Orientierungsinformation über das Bewegungsvorgabemittel in Bezug auf den Raum fortlaufend aktualisiert werden.

Es genügt dabei bereits, wenn die Orientierung des mit dem Objekt gekoppelten Bewegungsvorgabemittels zumindest in relativ kurzen Zeitabständen von beispielsweise 0.5s direkt aus den rotatorischen Lageinformationen des Manipulators berechnet werden und wenn zwischen diesen Zeitpunkten die Orientierung ausgehend von der letzten solcherart ermittelten Orientierungsinformation entweder über Extrapolation oder anhand der Signale der Inertialsensoren inkrementell fortgerechnet wird. Die in diesen kurzen Zeitabständen entstehenden Fehler sind für den betrachteten Anwendungsfall vernachlässigbar und werden mit dem nächsten direkt auf den rotatorischen Lageinformationen des Manipulators ermittelten Wert für die Orientierung jeweils wieder eliminiert, wodurch ein Anwachsen des Driftfehlers in dieser Phase ausgeschlossen ist. Eine solche rechnerische Extrapolation oder eine inkrementelle, sensorgeführte Bestimmung der veränderten Orientierung zwischen den Zeitpunkten mit der alleinigen Bestimmung aus der Manipulatorpose kann dann zweckmäßig sein, wenn die Lageinformationen seitens der Manipulatorsteuerung nicht mit jener Geschwindigkeit oder Häufigkeit oder zeitlichen Rasterung bereitgestellt werden können, wie sie für die Transformation und Übertragung der Bewegungsvorgaben bzw. der Eingaben der Bedienperson an die Manipulatorsteuerung benötigt werden.

Dadurch tritt die Drift zufolge der Fehler der Beschleunigungs- bzw. Inertialsensoren nur mehr in der normalerweise kurzen Zeit auf, in der das Bewegungsvorgabemittel tatsächlich händisch frei im Raum bewegt wird. Folglich können jene Intervalle, in denen eine Rekalibrierung des Systems erforderlich ist, deutlich verlängert werden. Insbesondere ist während eines länger andauernden Füge- oder Montageprozesses, während dem das Bewegungsvorgabemittel mit dem Objekt gekoppelt bleibt, jedenfalls keine Rekalibrierung erforderlich.

Durch den Rückgriff auf Informationen bzw. Daten der Steuervorrichtung bezüglich des Bewegungszustandes des Objekts bzw. des Manipulators und durch einen Vergleich mit den von den Inertialsensoren erfassten Messwerten zusammen mit den errechneten Informationen über die jeweils aktuelle Orientierung des Bewegungsvorgabemittels kann entsprechend einer zweckmäßigen Maßnahme auch überprüft werden, ob das Bewegungsvorgabemittel mit dem Objekt gekoppelt ist und/oder ob eine anhand der Daten der Inertialsensoren berechnete Orientierung des Bewegungsvorgabemittels hinreichend genau mit der tatsächlichen bzw. mit der steuerungsseitig kalkulierten Ausrichtung, insbesondere mit der anhand der internen Steuerungsdaten ermittelten Ausrichtung des Bewegungsvorgabemittels übereinstimmt. Stimmt die sensorisch ermittelte Orientierung aufgrund der Drift bzw. der Sensorfehler nicht mehr mit der datentechnisch ermittelten Richtung der Objektbewegung überein, oder löst sich während der Manipulatorbewegung das Bewegungsvorgabemittel in unbeabsichtigter Weise vom Objekt, so kann dies als gravierende Abweichung zwischen der steuerungsseitig bekannten Objektbewegung und der gemessenen Bewegung erkannt werden. Daraufhin kann, um die Gefahr einer ungewollten bzw. unkontrollierten Manipulatorbewegung zu vermeiden, eine laufende Bewegung umgehend gestoppt bzw. eine erneute Bewegung erst nach erfolgter Neukalibrierung des Systems wieder ermöglicht werden.

Ein Vorteil der Verwendung von Inertialsensoren liegt darin, dass bis auf eine bekannte bzw. vordefinierte Referenzlage keine besonderen externen Einrichtungen, wie Sende- oder Empfangseinrichtungen für Positionssignale und keine lokalen oder globalen Positionsbestimmungssysteme benötigt werden. Dies begünstigt eine möglichst kostengünstige Bereitstellung des erfindungsgemäßen Systems, nachdem auf komplexe Hardware sowie auf aufwendige Systeminstallationen verzichtet werden kann. Darüber hinaus sind die für den betreffenden Einsatz benötigten Inertialsensoren inzwischen ausreichend genau und zu einer preiswerten, kompakten und zuverlässigen Massenware geworden. Die für das erfindungsgemäße System vorzugsweise eingesetzten Inertialsensoren, insbesondere auf Halbleiterbasis bzw. in MEMS-Technik (mikro-elektro-mechanische Systeme), werden zudem kaum durch elektromagnetische Störfelder beeinträchtigt, wie sie in industriellen Umgebungen häufig auftreten. Insofern kann auch eine gute Störsicherheit erzielt werden.

Entsprechend einer zweckmäßigen Ausführung kann das im System implementierte Detektierungsmittel einen Sensor umfassen und das zu bewegende Objekt eine von diesem Sensor detektierbare Markierung oder Kennung aufweisen, wobei das Detektierungsmittel dazu ausgebildet ist, infolge einer Erfassung der Markierung durch den Sensor das Bewegungsvorgabemittel in den zweiten Betriebsmodus zu versetzen. Dadurch ist ein besonders zuverlässiger bzw. eindeutig initiierbarer Wechsel zwischen den jeweiligen Betriebsmodi des Systems erzielbar. Insbesondere ist dies eine Lösungsvariante, welche eine zuverlässige Detektion einer körperlichen Zuordnung des Bewegungsvorgabemittels zu einem bestimmten Objekt ermöglicht. Die räumliche Lage bzw. Orientierung dieses Objekts ist dabei der Steuervorrichtung des Manipulators bekannt bzw. durch die Steuervorrichtung des Manipulators ermittelbar. Neben einem relativ zweifelsfreien Kriterium für eine Umschaltung zwischen den Betriebsmodi betreffend die weitere Ermittlung der Orientierung des Bewegungsvorgabemittels, kann damit auch sichergestellt werden, dass eine Bewegung des Manipulators nur dann freigeschaltet wird bzw. ermöglicht ist, wenn das Bewegungsvorgabemittel an einer explizit vorgesehenen und markierten Stelle des Objekts angebracht ist.

Um unbeabsichtigte bzw. für die Bedienperson überraschende Auslösungen von Bewegungen des Manipulators hintan halten zu können, kann weiters vorgesehen sein, dass am Bewegungsvorgabemittel ein von der Bedienperson zu betätigendes Eingabe- bzw. Schaltelement ausgebildet ist, mit welchem Eingabe- bzw. Schaltelement der Steuervorrichtung eine durchgeführte Kopplung des Bewegungsvorgabemittels gegenüber dem Objekt und zudem eine Bereitschaft zur Durchführung von Verfahrbewegungen des Objekts via den Manipulator signalisierbar ist.

Gemäß einer vorteilhaften Ausführungsform kann das Detektierungsmittel auch dazu ausgebildet sein, die Signale der Inertialsensoren während eines definierten Beobachtungszeitraums auszuwerten, wobei das Detektierungsmittel dazu eingerichtet ist, für jenen Fall, dass diese Signale bezüglich der Beschleunigung des Bewegungsvorgabemittels und/oder bezüglich der aus dieser Beschleunigung errechneten Geschwindigkeitsänderung des Bewegungsvorgabemittels und/oder bezüglich der Positions- oder Orientierungsveränderung des Bewegungsvorgabemittels während dem definierten Beobachtungszeitraum unterhalb eines definierten ersten Grenzwertes und/oder unterhalb einer definierten Schwankungsbreite bleiben, das System in den zweiten Betriebsmodus zu versetzen. Durch diese vorteilhafte Ausgestaltung werden die im Bewegungsvorgabemittel integrierten Beschleunigungs- bzw. Inertialsensoren genutzt, um den Zustand der Ruhelage des Bewegungsvorgabemittels automatisiert zu erkennen und sodann in den zweiten Betriebsmodus zu wechseln und die zuletzt ermittelte Orientierung vorerst unverändert beizubehalten bzw. zu speichern und in weiterer Folge basierend auf den steuerungsseitigen Informationen über den Bewegungszustand des Objekts anzupassen. Insbesondere kann dabei ausgenutzt werden, dass bei der freihändigen Führung des Bewegungsvorgabemittels immer zumindest eine gewisse Schwankung oder ein leichtes Zittern vorliegen wird. Wird das Bewegungsvorgabemittel hingegen abgelegt oder mit einem stillstehenden, vom Manipulator getragenen Objekt mechanisch gekoppelt, verbleibt ein deutlich kleineres Restsignal von den Inertialsensoren, welches zwar einen bestimmten konstanten Offsetanteil als Fehler aufweisen kann, aber keine nennenswerten Schwankungen aufweisen wird.

Durch die angegebenen technischen Maßnahmen zur Umsetzung des Systems sind bewegungsbedingte Änderungen der Orientierung des Objekts durch den Manipulator festgelegt bzw. bestimmt. Die Steuervorrichtung des Manipulators kann somit Informationen bzw. Daten über die Orientierung bzw. über die fortlaufenden Änderungen der Orientierung des Objekts an die Orientierungsermittlungseinheit übermitteln. Die Orientierungsermittlungseinheit kann in weiterer Folge dazu ausgebildet sein, im zweiten Betriebsmodus die fortlaufend sich verändernden Orientierungen des Bewegungsvorgabemittels basierend auf den von der Steuervorrichtung des Manipulators übermittelten bzw. bereitgestellten Informationen zu ermitteln, insbesondere zu berechnen. Durch diese besonders vorteilhaften Maßnahmen ist es ermöglicht, dass während jener Zeitspanne, in der das Bewegungsvorgabemittel mit einem vom Manipulator bewegten Objekt bzw. Werkstück gekoppelt ist, die Orientierung des Bewegungsvorgabemittels fortlaufend aus der steuerungsseitig veranlassten und somit datentechnisch abgebildeten Änderung der Orientierung des Werkstücks ermittelt wird und nicht auf die fehler- bzw. driftbehafteten Messdaten der Inertialsensoren zurückgegriffen werden muss. Ein Einfluss der Drift der Inertialsensoren ist daher während dieser Phase zuverlässig unterbunden bzw. ohne negative Auswirkung und die Gebrauchsdauer des Bewegungsvorgabemittels bis zum nächsten erforderlichen Kalibriervorgang kann somit erheblich verlängert bzw. die Häufigkeit der erforderlichen Kalibrierungen deutlich verringert werden.

Ferner kann das Detektierungsmittel dazu ausgebildet sein, an die Steuervorrichtung oder an eine eigenständige Sicherheitssteuerung des Manipulators ein erstes Sperrsignal zu übermitteln, welches die Ausführung von Bewegungen des Manipulators unterbindet, wenn das Detektierungsmittel detektiert, dass das Bewegungsvorgabemittel händisch frei im Raum bewegt wird. Dadurch kann auch erkannt werden, wenn sich das Bewegungsvorgabemittel vom zu bewegenden Objekt bzw. Werkstück oder Bauteil plötzlich löst bzw. ungewollt gelöst hat, was für den Benutzer ein gewisses Überraschungsmoment und dementsprechend unbeabsichtigte oder unkontrollierte Bewegungen und Bedienhandlungen nach sich ziehen kann. In weiterer Folge wird dann eine Bewegung des Manipulators umgehend bzw. automatisiert unterbunden. Beispielsweise kann dadurch in einer solchen Situation auch ein unbeabsichtigtes Anstoßen des zu bewegenden Objekts an irgendwelchen benachbarten Gegenständen, beispielsweise anderen Bau- und Konstruktionsteilen, unterbunden werden.

Systemgemäß ist die Orientierung des Objekts durch die jeweilige Pose des Manipulators bestimmt und die Steuervorrichtung des Manipulators kann Informationen über die Orientierung oder über die fortlaufenden Änderungen der Orientierung des Objekts an das Detektierungsmittel übermitteln. Das Detektierungsmittel kann dabei dazu ausgebildet sein, diese steuerungsseitigen Informationen über die Bewegung des Objekts mit den Bewegungsinformationen seitens der Inertialsensoren zu vergleichen. Zudem kann das Detektierungsmittel dazu vorgesehen sein, das System automatisiert in den ersten Betriebsmodus versetzen, wenn eine Abweichung der Beschleunigung oder der daraus abgeleiteten Rotationsgeschwindigkeit oder der Winkeländerung zwischen den sensorischen Informationen seitens des Bewegungsvorgabemittels und den Informationen seitens der Steuervorrichtung einen definierten zweiten Grenzwert überschreitet. Durch diese vorteilhafte Weiterbildung werden also während einer aktiven Bewegung des vom Manipulator gehaltenen Objekts die daraus bekannten Bewegungszustände des Objekts ständig mit den von den Inertialsensoren erhaltenen Informationen über die Änderung des Bewegungszustandes verglichen. Solange die Abweichungen aus diesem Vergleich hinreichend gering sind, kann die Bestimmung der Orientierung des Bewegungsvorgabemittels unter Vermeidung der Driftfehler der Inertialsensoren alleinig aus den Informationen über den rotatorischen Lage- und Bewegungszustand des Objekts bzw. anhand der Daten der Steuerungsvorrichtung vorgenommen werden. Sobald jedoch eine über einer bestimmten Schwelle liegende Diskrepanz zwischen den Sensorsignalen und den steuerungsseitigen Bewegungsinformationen festgestellt wird, ist davon auszugehen, dass die Orientierung des Bewegungsvorgabemittels eben nicht mehr durch das Objekt festgelegt ist. Die weitere Ermittlung der Orientierung des Bewegungsvorgabemittels erfolgt dann basierend auf den darin integrierten Beschleunigungssensoren. Der Wechsel bzw. Rücksprung in den ersten Betriebsmodus des Systems kann dadurch automatisiert erfolgen, insbesondere unmittelbar und unabhängig von irgendwelchen zusätzlichen sensorischen Informationen oder manuellen Eingaben vorgenommen werden.

Entsprechend einer weiteren Ausführungsform kann das Detektierungsmittel dazu ausgebildet sein, den Vergleich zwischen (i) den steuerungsseitigen Informationen über die Bewegung des Objekts und (ii) den Bewegungsinformationen basierend auf den Inertialsensoren betragsmäßig, also gemäß dem Betrag der jeweiligen Parameterwerte, durchzuführen. Dies ist eine einfache Auswertung, mit der in praktikabler Art und Weise geprüft wird, ob bzw. inwieweit die Beschleunigung oder Geschwindigkeit des Bewegungsvorgabemittels basierend auf den Messwerten von dessen Sensoren mit den steuerungsseitigen Daten bzw. mit den daraus berechneten Werten zeitlich und betragsmäßig übereinstimmen.

Gemäß einer alternativen Ausführungsform kann das Detektierungsmittel dazu ausgebildet sein, den Vergleich zwischen (i) den steuerungsseitigen Informationen über die Bewegung des Objekts und (ii) den Bewegungsinformationen basierend auf den Inertialsensoren vektoriell unter Berücksichtigung der Richtungskomponenten der Bewegungsinformationen durchzuführen. Ein solcher vektorieller Vergleich der Beschleunigung bzw. Geschwindigkeit berücksichtigt neben den Beträgen dieser Bewegungskenngrößen auch die Daten über die Orientierung des Bewegungsvorgabemittels, sodass bei einer zu großen Abweichung bzw. einem zu großen Fehler der intern ermittelten Orientierung dieser Fehler relativ eindeutig und fehlersicher erkannt werden kann.

Um auch nach einer relativ langen Zeitspanne eine möglichst exakte Ermittlung der wechselnden Orientierungen des Bewegungsvorgabemittels zu erzielen, kann auch vorgesehen sein, dass eine Speichereinheit mit für die Orientierungsermittlungseinheit zugreifbaren Korrekturwerten vorgesehen ist und die Orientierungsermittlungseinheit dazu ausgebildet ist, die Sensorwerte der Inertialsensoren im Zuge der Berechnung der Bewegungsinformationen mit diesen Korrekturwerten rechnerisch zu korrigieren.

Die Orientierung des Objekts - und folglich auch eines darauf befestigten Bewegungsvorgabemittels - ist durch die jeweils eingenommene Pose des Manipulators bestimmt. In diesem Zusammenhang ist es zweckmäßig, wenn die Steuervorrichtung des Manipulators in kurzen Zeitabständen Informationen über die Orientierung oder über die fortlaufenden Änderungen der Orientierung des Objekts an die Orientierungsermittlungseinheit übermittelt oder solche Informationen für einen Abruf durch die Orientierungsermittlungseinheit bereitstellt. Die Orientierungsermittlungseinheit kann auch dazu ausgebildet sein, diese Informationen über die Bewegung des Objekts mit den Bewegungsinformationen seitens der Inertialsensoren zu vergleichen, wobei die Orientierungsermittlungseinheit weiters dazu ausgebildet ist, die Korrekturwerte für die rechnerische Korrektur der Sensorwerte der Inertialsensoren derart anzupassen, dass eine Abweichung der Bewegungsinformationen aus den mit den Korrekturwerten korrigierten Sensorwerten gegenüber den Bewegungsinformationen zufolge der Informationen von der Steuervorrichtung des Manipulators minimiert ist.

Entsprechend einer vorteilhaften Weiterbildung kann ein Kollisionserkennungsmittel vorgesehen sein oder das Detektierungsmittel dazu eingerichtet sein, die Signale der Beschleunigungssensoren auszuwerten und mit einem dritten Grenzwert zu vergleichen. Das Kollisionserkennungsmittel oder das Detektierungsmittel ist dabei weiters dazu vorgesehen, ein Sperrsignal an die Steuervorrichtung oder an eine eigenständige Sicherheitssteuerung des Manipulators zu übermitteln, welches Sperrsignal eine Bewegung des Manipulators automatisiert unterbindet, wenn der dritte Grenzwert überschritten wird. Durch diese Weiterbildung wird die Bewegung des Manipulators gestoppt, wenn durch die Beschleunigungs- bzw. Inertialsensoren eine unerwartet hohe, negative Beschleunigung, insbesondere eine abrupte Verzögerung, zufolge einer Kollision des bewegten Objekts bzw. des darauf befestigten Bewegungsvorgabemittels erfasst wird. Dadurch können in vorteilhafter Art und Weise die Auswirkungen einer solchen Kollision möglichst gering gehalten werden.

Gemäß einer zweckmäßigen Ausführung kann auch ein Impulserkennungsmittel vorgesehen sein oder das Detektierungsmittel dazu eingerichtet sein, die Signale der Inertialsensoren auszuwerten und mit einem vierten Grenzwert zu vergleichen. Das Impulserkennungsmittel oder das Detektierungsmittel ist dabei weiters dazu ausgebildet, ein Bewegungskommando an die Steuervorrichtung des Manipulators abzusetzen, durch welches Bewegungskommando eine definiert begrenzte Bewegung des vom Manipulator geführten Objekts in Richtung der festgestellten Beschleunigung ausgelöst wird. Impulsartige Schläge können von den Inertialsensoren im Bewegungsvorgabemittel auch dann aufgenommen werden, wenn das Bewegungsvorgabemittel bereits am zu bewegenden Objekt befestigt bzw. darauf abgestützt ist. Aufgrund der relativ charakteristischen Beschleunigungen können solche Schlag- bzw. Klopfimpulse zuverlässig aufgenommen bzw. gut detektiert werden. Damit kann ein Einrichten und Positionieren eines Objekts im Zuge eines Fügeprozesses nicht nur durch Betätigung des eigentlichen Eingabemittels am Bewegungsvorgabemittel erfolgen, sondern kann die Bedienperson auch durch leichte Schläge auf das Objekt bzw. durch definiertes Klopfen auf das Bewegungsvorgabemittel minimale Lagekorrekturen ausführen. Diese Maßnahmen sind dabei einem Vorgehen ähnlich, wie es auch bei einem ausschließlich manuell ausgeführten Fügeprozess in relativ natürlicher Art und Weise zur Anwendung kommen würde.

Zweckmäßig kann es auch sein, wenn das Bewegungsvorgabemittel zumindest ein Eingabemittel in Art eines Zustimmtasters umfasst, welches Eingabemittel für eine von der Bedienperson bewusst zu initiierende Freischaltung von Bewegungen des Manipulators vorgesehen ist, und dieses Eingabemittel in Abhängigkeit von seinem Betätigungszustand zur Generierung eines Freigabesignals und zur Übermittlung an die Steuervorrichtung oder an eine Sicherheitssteuerung des Manipulators eingerichtet ist. Gefährliche Zustände bzw. Schäden in Bezug auf Gesundheit und Sachwerte, unter anderem aufgrund von Missverständnissen bzw. Unachtsamkeiten der Bedienperson, können dadurch in effektiver Art und Weise hintangehalten werden.

Gemäß einer praktikablen Maßnahme ist vorgesehen, dass das Bewegungsvorgabemittel eine bedarfsweise aktivier- und deaktivierbare Kopplungsvorrichtung aufweist, welche Kopplungsvorrichtung für die zeitweilige Herstellung einer bedarfsweise lösbaren Verbindung gegenüber dem Objekt und zur Übertragung von Kräften und Momenten zwischen dem Objekt und dem Bewegungsvorgabemittel vorgesehen ist. Dadurch kann das Bewegungsvorgabemittel im Zuge von anstehenden Objektbewegungen ausreichend starr bzw. fest und dennoch wieder ablösbar mit dem zu bewegenden Objekt verbunden werden. Die Kopplungsvorrichtung ist dabei vorzugsweise werkzeuglos aktivier- und deaktivierbar, sodass eine zeitsparende und komfortable Handhabung gewährleistet ist. Die entsprechende Kopplungsvorrichtung kann dabei insbesondere durch eine mechanische Klemm- oder Steckverbindung und/oder einen Saugnapf und/oder eine Magnethalterung und/oder eine Adhäsions- oder Klebefläche zum mehrmaligen, bedarfsweise lösbaren Ankleben am Objekt gebildet sein.

Zweckmäßig ist es auch, wenn das Bewegungsvorgabemittel zumindest ein von der Bedienperson betätigbares Eingabemittel zum Auslösen einer Bewegung des Manipulators aufweist. Dieses Eingabemittel kann dabei in Art eines relativbeweglich gelagerten Steuerknüppels oder in Art eines starren, kräftesensorischen Handgriffes ausgeführt sein kann. Eingabemittel in der Art eines 6D-Joysticks bzw. einer sogenannten 6D-Spacemouse sind besonders vorteilhaft, weil sämtliche rotatorischen und linearen Bewegungsvorgaben unmittelbar und intuitiv über ein einziges Bedienelement eingebbar sind. Diesem Eingabemittel ist eine Bewegungsrichtung in Bezug auf ein gerätefestes, lokales Koordinatensystem des Bewegungsvorgabemittels zugeordnet, wobei das Gesamtsystem dazu eingerichtet ist, in Abhängigkeit von der Orientierung des lokalen Koordinatensystems in einem Weltkoordinatensystem des Manipulators eine Umrechnung oder Transformation dieser Bewegungsrichtung in Bezug auf das lokale Koordinatensystem in eine äquivalente oder gleich orientierte Bewegungsrichtung in Bezug auf das Weltkoordinatensystem des Manipulators auszuführen. Dadurch wird der Bedienperson ein besonders intuitives und fehlervermeidendes System zur roboterunterstützten Manipulation bzw. Bewegungssteuerung eines Objekts bzw. Bauteils zur Verfügung gestellt. Die Effizienz und Qualität von Montage- bzw. Fertigungsprozessen kann dadurch gesteigert werden.

Ferner kann vorgesehen sein, dass das Bewegungsvorgabemittel ein Eingabeelement aufweist, durch dessen Betätigung ein Wechsel vom ersten in den zweiten oder vom zweiten in den ersten Betriebsmodus seitens der Bedienperson unmittelbar veranlassbar ist. Alternativ kann vorgesehen sein, mit diesem Eingabeelement vordefinierte Grenzwerte für einen automatischen Wechsel des Betriebsmodus vorübergehend bewusst so zu verändern, dass dieser Wechsel des Betriebsmodus rascher erfolgt, d.h. forciert wird. Ebenso kann vorgesehen sein, dass eine Betätigung dieses Eingabeelementes als zusätzliche Information für eine steuerungstechnische Plausibilisierung eines automatisch veranlassten Wechsels des Betriebsmodus miteinbezogen ist. Mit den genannten Maßnahmen kann einerseits die Benutzerfreundlichkeit bzw. Nutzungsqualität und andererseits das Systemverhalten begünstigt werden.

Entsprechend einer vorteilhaften Ausführungsform kann auch vorgesehen sein, dass das Bewegungsvorgabemittel ein Anzeigeelement aufweist, welches Anzeigeelement dazu eingerichtet ist, einer Bedienperson zu signalisieren, ob sich das System im ersten oder im zweiten Betriebsmodus befindet. Auch durch diese Maßnahmen kann die Benutzerfreundlichkeit gesteigert werden. Zudem kann dadurch eine plan- bzw. ordnungsgemäße Systemnutzung begünstigt werden, nachdem irrtümliche Bedienhandlungen hintangehalten werden können. Auch Verzögerungen aufgrund von untauglichen Bedienungsabläufen bzw. fehlerhaften Anwendungen können dadurch vermieden werden.

Zweckmäßig ist es auch, wenn das Bewegungsvorgabemittel über eine drahtlos aufgebaute Kommunikationsverbindung, insbesondere eine Funkverbindung, mit der Steuervorrichtung datentechnisch koppelbar ist. Dadurch kann die Bewegungsfreiheit der Bedienperson im Vergleich zu einer Kabelanbindung begünstigt werden. Auch die insgesamt erzielbare Ergonomie bzw. Handhabbarkeit wird dadurch positiv beeinflusst.

Die Aufgabe der Erfindung wird auch durch ein Verfahren mit den nachfolgend angegebenen Schritten bzw. Verfahrensmaßnahmen gelöst.

Das erfindungsgemäße Verfahren zum räumlichen Bewegen eines Objekts mittels einem durch eine elektronische Steuervorrichtung gesteuerten Manipulator, insbesondere einem Industrieroboter, umfasst insbesondere die Schritte:

- Herstellen einer zumindest zeitweiligen Bewegungskopplung des zu bewegenden Objekts mit einem Endeffektor des Manipulators;

- Verbringen eines von einer Bedienperson zumindest zeitweilig händisch frei im Raum bewegbaren Bewegungsvorgabemittels mit darin baulich integrierten Inertialsensoren in eine Referenzorientierung, welche Referenzorientierung in Bezug auf ein Weltkoordinatensystem des Manipulators vorbestimmt und der Steuervorrichtung bekannt ist, oder welche Referenzorientierung durch die Steuervorrichtung rechnerisch eruierbar ist;

- Berechnen einer ersten Transformationsmatrix für die Transformation von Richtungsvektoren zwischen einem auf das Bewegungsvorgabemittel bezogenen, lokalen Koordinatensystem des in Referenzorientierung ausgerichteten Bewegungsvorgabemittels und dem Weltkoordinatensystem des Manipulators;

- Verbringen des Bewegungsvorgabemittels durch die Bedienperson ausgehend von dessen Referenzorientierung an eine beliebige, von der Bedienperson gewünschte Stelle auf dem vom Manipulator zu bewegenden Objekt, wobei die erste Transformationsmatrix anhand der Sensorsignale der Inertialsensoren entsprechend der Änderung der Orientierung des Bewegungsvorgabemittels aktualisiert wird;

- Herstellen einer körperlichen Kopplung respektive einer starren Bewegungsverbindung zwischen dem Bewegungsvorgabemittel und dem zu bewegenden Objekt durch die Bedienperson;

- Bereitstellen einer zweiten Transformationsmatrix durch die Steuervorrichtung des Manipulators, welche eine Transformation von Richtungsvektoren zwischen dem Weltkoordinatensystem des Manipulators und einem starr mit dem Endeffektor assoziierten Effektorkoordinatensystem entsprechend der zum Koppelzeitpunkt vorliegenden Pose des Manipulators ermöglicht;

- Bestimmen einer dritten Transformationsmatrix aus der ersten und zweiten Transformationsmatrix, welche dritte Transformationsmatrix eine Transformation von Richtungsvektoren zwischen dem lokalen Koordinatensystem des Bewegungsvorgabemittels und dem mit dem Endeffektor starr assoziierten Effektorkoordinatensystem ermöglicht;

- fortlaufende Betätigungen des Bewegungsvorgabemittels in jene Betätigungsrichtungen, welche den beabsichtigten Bewegungsrichtungen des Objekts zumindest teilweise entsprechen und Erfassung von Richtungsinformationen über die am Bewegungsvorgabemittel fortlaufend vorgenommenen Betätigungshandlungen der Bedienperson sowie wiederholte Bereitstellung einer gemäß der zum Bereitstellungszeitpunkt jeweils aktuell vorliegenden Pose des Manipulators aktualisierten zweiten Transformationsmatrix durch die Steuervorrichtung und fortlaufende Transformation dieser Richtungsinformationen mittels der zweiten und der dritten Transformationsmatrix in das Weltkoordinatensystem des Manipulators und Einleitung von Bewegungen des Manipulators durch dessen Steuervorrichtung derart, dass Bewegungsrichtungen des Objekts den von der Bedienperson am Bewegungsvorgabemittel eingeleiteten Betätigungsrichtungen zumindest teilweise entsprechen.

Die erfindungsgemäßen Maßnahmen ermöglichen insbesondere eine absolut intuitive Bewegungssteuerung des Objekts bzw. des Manipulators. Das Denken in unterschiedlichen Koordinatensystemen und daran angepassten Betätigungs- bzw. Aktivierungsrichtungen gegenüber dem Bewegungsvorgabemittel bzw. gegenüber dessen Eingabemittel bleibt der Bedienperson gänzlich erspart. Die benötigte Zeitdauer für Montage- bzw. Fügeprozesse kann dadurch verkürzt und zugleich eine hohe Positioniergenauigkeit von zu bewegenden Objekten erzielt werden. Ein wesentlicher Vorteil der erfindungsgemäßen Maßnahmen liegt auch darin, dass sich das unabwendbare Driftverhalten der Inertialsensoren und die mathematisch bedingte Fehleranhäufung aufgrund der erforderlichen Integral- oder Summenoperation bzw. die begrenzte Rechengenauigkeit in Zusammenhang mit der Verarbeitung der Signale von den Inertialsensoren kaum bzw. gar nicht auf die erzielbare Positioniergenauigkeit des Objekts bzw. auf die Bewegungsabläufe des Manipulators auswirken. Insbesondere werden erfindungsgemäß ab dem Zeitpunkt einer vorliegenden Kopplung des Bewegungsvorgabemittels an das vom Manipulator geführte Objekt die sich verändernden Orientierungen des Bewegungsvorgabemittels fortlaufend oder zumindest in vergleichsweise kurzen Zeitabständen direkt und alleinig aus den rotatorischen Lageinformationen des Objekts bzw. des Endeffektors bestimmt, d.h. ohne Rückgriff auf zuvor aufsummierte inkrementelle Änderungen der Orientierung. Ein fortschreitendes Anwachsen des Driftfehlers zufolge der Summierung bzw. Integration der fehlerbehafteten Sensorsignale wird dadurch unterbunden bzw. wird ein solcher Driftfehler regelmäßig in kurzen Zeitabständen eliminiert, bevor ein störendes Ausmaß erreicht wird.

Die jeweils gewünschten Manipulatorbewegungen werden dabei in komfortabler Art und Weise durch Betätigungshandlungen der Bedienperson gegenüber dafür vorgesehenen Abschnitten oder Stellelementen des Bewegungsvorgabemittels eingeleitet. Diese Betätigungshandlungen bzw. Krafteinwirkungen seitens der Bedienperson können dabei geringfügige Relativverstellungen von Teilabschnitten bzw. Stellelementen des Bewegungsvorgabemittels verursachen. Alternativ ist es auch möglich, lediglich die jeweiligen Kraft- bzw. Druckeinwirkungen gegenüber dem Bewegungsvorgabemittel und deren Einwirkungsrichtung sensorisch zu erfassen, durch entsprechende Richtungssignale bzw. Richtungsdaten abzubilden und in weiterer Folge in entsprechende Steuerbefehle zur Bewegungssteuerung des Manipulators umzusetzen. Zweckmäßig ist insbesondere eine Betätigung des Bewegungsvorgabemittels seitens der Bedienperson durch Zug-, Druck-, Kipp- oder Drehbeanspruchungen gegenüber dem Bewegungsvorgabemittel in jene Betätigungsrichtungen, welche den von der Bedienperson beabsichtigten Bewegungsrichtungen des Objekts zumindest teilweise entsprechen.

Ein wesentlicher Vorteil der erfindungsgemäßen Maßnahmen liegt auch darin, dass jene Zeitspanne, nach welcher eine Rekalibrierung des Systems aufgrund des unvermeidlichen Driftverhaltens der Inertialsensoren bzw. der daraus generierten Daten erforderlich ist, deutlich verlängert werden kann. Insbesondere können die von Zeit zu Zeit erforderlichen Handlungen zur Rekalibrierung des Systems unter Umständen auf Zeitspannen ausgedehnt werden, welche für den Abschluss eines bestimmten Montage- bzw. Fügezyklus im Fertigungsprozess ausreichend sind, sodass ein solcher Montage- bzw. Fügezyklus durch eine Neukalibrierung nicht mehr unterbrochen werden muss.

Zum besseren Verständnis der Erfindung wird diese anhand der nachfolgenden Figuren näher erläutert.

Es zeigen jeweils in stark vereinfachter, schematischer Darstellung:

Fig. 1 ein Ausführungsbeispiel eines erfindungsgemäßen Systems mit einem Gelenkarmroboter als Manipulator für ein räumlich zu bewegendes Objekt bzw. Bauteil;

Fig. 2 eine Schemadarstellung eines Bewegungsvorgabemittels, wie es im System gemäß Fig. 1 zum Einsatz kommen kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

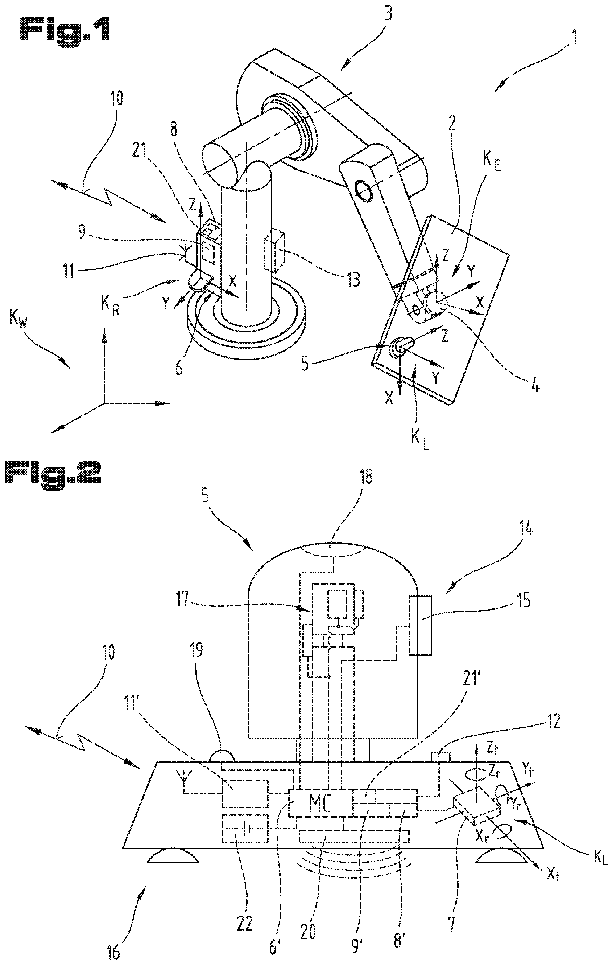

In Figur 1 ist ein Ausführungsbeispiel eines technischen Systems 1 zur räumlichen Bewegung eines Objekts 2 mittels eines Manipulators 3 veranschaulicht. Der Manipulator 3 kann dabei insbesondere durch einen Industrieroboter gebildet sein, beispielsgemäß als 6-Achsen-Gelenkarm-Robotor ausgeführt sein. Das von diesem Manipulator 3 im Raum zu bewegende Objekt 2, ist insbesondere durch ein zu montierendes Bauteil bzw. durch ein Werkstück, wie zum Beispiel durch eine Windschutzscheibe, einen Fahrzeugsitz oder dergleichen gebildet.

Das Objekt 2 wird vom Manipulator 3 getragen bzw. aufgenommen und entsprechend der Vorgaben einer Bedienperson im Raum bewegt, beispielsweise einem Halbfabrikat hinzugefügt. Demzufolge ist das jeweilige Objekt 2 zumindest vorübergehend mit dem Manipulator 3 bewegungsgekoppelt. Hierzu kann der Manipulator 3 beliebige Endeffektoren 4, beispielsweise einen mechanischen Greifer, Saugnäpfe, Magnetkoppler oder sonstige Vorrichtungen zur lösbaren Kopplung eines Objekts 2 gegenüber dem Manipulator 3 aufweisen. Das entsprechende Automatisierungssystem 1 umfasst wenigstens ein Bewegungsvorgabemittel 5, welches von einer Bedienperson des Systems 1 zumindest zeitweilig händisch frei im Raum bewegbar ist. Das heisst, dass dieses elektromechanische Bewegungsvorgabemittel 5 wenigstens vorübergehend portabel bzw. mobil ist und von der Bedienperson frei im Raum bewegt bzw. geführt werden kann. In dieser freien bzw. ungebundenen Phase des Bewegungsvorgabemittels 5 ist es ermöglicht, die damit ausgeführten Bewegungen, insbesondere dessen Orientierungsveränderungen, durch entsprechende Sensorsignale ausgehend von internen Beschleunigungs- bzw. Inertialsensoren zumindest zeitweise zu charakterisieren und diese Sensorsignale aufzuzeichnen bzw. nahezu in Echtzeit zu verwerten. Die entsprechenden Aufzeichnungen bzw. Verwertungen der Sensorsignale erfolgen dabei in Zusammenhang mit der Umsetzung des angegebenen Verfahrensablaufes bzw. aufgrund eines expliziten Kommandos der Bedienperson. Das heisst, dass nicht sämtliche Bewegungen des Bewegungsvorgabemittels 5 aufgezeichnet werden bzw. keine ununterbrochene Auswertung der Bewegungen bzw. Orientierungsveränderungen erfolgen muss.

Das beispielsweise griffartig oder stabförmig ausgebildete Bewegungsvorgabemittel 5 ist zudem für eine zumindest zeitweilige, körperliche Kopplung mit dem vom Manipulator 3 zu bewegenden Objekt 2 vorgesehen. Speziell in diesem temporären Kopplungszustand des Bewegungsvorgabemittels 5 gegenüber dem zu bewegenden Objekt 2 ist das Bewegungsvorgabemittel 5 für die Abgabe von Steuer- bzw. Bewegungskommandos seitens der Bedienperson an eine elektronische Steuervorrichtung 6 des Manipulators 3 vorgesehen. Der Manipulator 3 bzw. dessen Endeffektor 4 mitsamt dem Objekt 2 kann somit basierend auf den Vorgaben bzw. Bewegungskommandos der Bedienperson bewegt werden, was einer handgeführten Bewegungsteuerung für den Manipulator 3 entspricht und letztlich als kooperatives Zusammenwirken zwischen der Bedienperson und dem Manipulator 3 verstanden werden kann.

Die Steuervorrichtung 6 des Manipulators ist hierbei als zentrale, örtlich zugewiesene Einheit dargestellt. Selbstverständlich ist es auch möglich, mehrere verteilt bzw. dezentral angeordnete Steuerungseinheiten vorzusehen, wobei diese verteilt angeordneten Steuerungseinheiten insgesamt die Steuervorrichtung 6 des Systems 1 bilden können. Insbesondere kann auch innerhalb des Bewegungsvorgabemittels 5 eine Steuervorrichtung 6' vorgesehen sein, welche mit der stationären bzw. robotorseitigen Steuervorrichtung 6 zusammenwirkt und so die Steuervorrichtung 6 funktional ergänzt bzw. komplettiert. Nachfolgend wird der Einfachheit wegen lediglich von der Steuervorrichtung 6 bzw. 6' gesprochen, welche zentral und/oder dezentral organisiert sein kann.

Die Steuervorrichtung 6, 6' umfasst jeweils wenigstens einen Prozessor bzw. Mikrocontroller, dessen Funktionsabläufe softwaretechnisch definiert sind bzw. welche jeweils durch softwaretechnische Mittel programmiert sind. Diese softwaretechnischen Mittel sind - wie an sich bekannt - in elektronischen Speichervorrichtungen hinterlegt.

Wie am besten aus einer Zusammenschau der Figuren 1 und 2 entnehmbar ist, ist im tragbaren bzw. mobilen Bewegungsvorgabemittel 5 wenigstens ein Inertialsensor 7 bzw. wenigstens eine inertiale Messeinheit (IMU) integriert. Zweckmäßigerweise sind diese Inertialsensoren 7 in Halbleitertechnik ausgeführt, insbesondere in MEMS-Technik (mikro-elektro-mechanische Systeme) umgesetzt. Mit diesen Inertialsensoren 7 ist es ermöglicht, zumindest die räumliche Orientierung bzw. die Orientierungsveränderungen des Bewegungsvorgabemittels 5 im dreidimensionalen Raum zu erfassen bzw. zu ermitteln. Grundsätzlich kann mit den Inertialsensoren 7 auch die räumliche Lage (Pose), also die Kombination von räumlicher Position und Orientierung ermittelt werden. Für die Zwecke des erfindungsgemäßen Verfahrensablaufes ist aber die Ermittlung der wechselnden Orientierungen des Bewegungsvorgabemittels 5 ausreichend und kann auf die relativ ungenaue bzw. wenig zeitstabile Positionsermittlung in vorteilhafter Weise verzichtet werden.

Insbesondere ist im System 1 eine softwaretechnische Orientierungsermittlungseinheit 8, 8' implementiert, welche zur fortlaufenden Ermittlung der wechselnden Orientierungen des Bewegungsvorgabemittels 5 in Bezug auf den dreidimensionalen Raum vorgesehen ist. Die Orientierungsermittlungseinheit 8, 8' kann dabei kombinatorisch in den Steuervorrichtungen 6, 6' vorgesehen sein, oder auch in nur einer der Steuervorrichtungen 6, 6' maßgeblich implementiert sein. Insbesondere errechnet die wenigstens eine Orientierungsermittlungseinheit 8, 8' auf Basis von vorliegenden Signalen bzw. bereitgestellten Daten der Inertialsensoren 7 wenigstens die jeweilige Orientierung (Ausrichtung) des Bewegungsvorgabemittels 5 bzw. die jeweiligen zeitlichen Veränderungen der Orientierung des Bewegungsvorgabemittels 5, wie dies im nachfolgenden im Detail beschrieben ist. Seitens der Orientierungsermittlungseinheit 8, 8' kann dabei auf die Ermittlung der räumlichen Position des Bewegungsvorgabemittels 5 verzichtet werden. Eine Bestimmung der räumlichen Position des Bewegungsvorgabemittel 5 anhand der integrierten Inertialsensoren 7 wäre nämlich im Vergleich zur Ermittlung der jeweiligen Orientierung des Bewegungsvorgabemittels 5 relativ fehlerbehaftet bzw. von erhöhter Driftanfälligkeit. Demzufolge bestimmt die Orientierungsermittlungseinheit 8, 8' basierend auf den Sensorsignalen bzw. Daten der Inertialsensoren 7 vorzugsweise ausschließlich die jeweilige Orientierung bzw. Orientierungsveränderungen des Bewegungsvorgabemittels 5 in Bezug auf den dreidimensionalen Raum bzw. in Bezug auf das Weltkoordinatensystem des Manipulators 3.

Um nämlich für die Bedienperson eine möglichst intuitive Bewegungsvorgabe bzw. eine möglichst eindeutige Absetzung von Bewegungskommandos gegenüber dem Manipulator 3 bzw. gegenüber dessen Steuervorrichtung 6 zu ermöglichen, ist die jeweilige Orientierung des Bewegungsvorgabemittels 5 im Raum primär entscheidend. Insbesondere ist die steuerungstechnische Ausführung von zumindest einem der Bewegungskommandos, welche über das Bewegungsvorgabemittel 5 von der Bedienperson eingeleitet werden, zumindest teilweise von der momentanen Orientierung des Bewegungsvorgabemittels 5 abhängig.

Das Automatisierungssystem 1 umfasst des Weiteren wenigstens ein elektronisches bzw. softwaretechnisches Auswertungs- bzw. Detektierungsmittel 9, 9'. Dieses softwaretechnische Detektierungsmittel 9 bzw. 9' setzt auf softwaretechnischer Basis eine Mehrzahl von technischen Maßnahmen bzw. Funktionalitäten um bzw. ist das Detektierungsmittel 9, 9' zur Bereitstellung von Funktionen vorgesehen, wie sie einleitend sowie im Nachfolgenden im Detail beschrieben sind. Das programm- bzw. softwaretechnische Detektierungsmittel 9, 9' kann dabei wiederum sowohl in der Steuervorrichtung 6 als auch in der Steuervorrichtung 6' implementiert sein, oder alternativ in nur einer dieser Steuervorrichtungen 6, 6' umgesetzt sein. Das Detektierungsmittel 9, 9' kann im Hinblick auf die jeweils umgesetzten Funktionen auch als Auswertungsmittel verstanden bzw. bezeichnet werden. Zum einen kann dieses primär softwaretechnisch implementierte Detektierungsmittel 9, 9' dazu vorgesehen sein, das System 1 in einen ersten Betriebsmodus zu versetzen, wenn das Bewegungsvorgabemittel 5 durch die Bedienperson händisch frei im Raum bewegt wird und währenddessen zumindest die Orientierungsveränderungen des Bewegungsvorgabemittels 5 eruiert bzw. aufgezeichnet werden sollen. Dieses Detektierungsmittel 9, 9' ist des Weiteren dazu vorgesehen, das System 1 in einen zweiten Betriebsmodus zu überführen, wenn die jeweiligen räumlichen Orientierungen bzw. Orientierungsveränderungen des Bewegungsvorgabemittels 5 aufgrund seiner mechanischen Kontaktierung bzw. Kopplung mit dem zu bewegenden Objekt 2 durch die Objektbewegungen, also durch die Bewegungen des Manipulators 3 definiert sind.

Die entsprechenden Umschaltungen bzw. Wechsel in die jeweiligen Betriebsmodi des Systems 1 sind dabei nicht als Schaltvorgänge im eigentlichen Sinn zu interpretieren, sondern vielmehr als programmtechnische Sprünge bzw. als Zustandswechsel in der datentechnischen Verarbeitung des Systems 1 zu verstehen, wie sie dem Fachmann vom Prinzip her hinlänglich bekannt sind. Entsprechend einem wesentlichen Aspekt der Erfindung ist dabei vorgesehen, dass im ersten Betriebsmodus, in welchem das Bewegungsvorgabemittel 5 im Raum händisch frei bewegbar ist, die wechselnden Orientierungen des Bewegungsvorgabemittels 5 basierend auf Signalen der Inertialsensoren 7 berechnet bzw. ermittelt werden. Demgegenüber errechnet bzw. bestimmt die Orientierungsermittlungseinheit 8, 8' bei Vorliegen des zweiten Betriebsmodus, insbesondere bei fester Kopplung des Bewegungsvorgabemittels 5 mit dem zu bewegenden Objekt 2, die wechselnden Orientierungen des Bewegungsvorgabemittels 5 entweder fortwährend oder zumindest wiederkehrend in vergleichsweise kurzen Zeitabständen ausschließlich basierend auf Informationen bzw. datentechnischen Annahmen von Seiten der Steuervorrichtung 6 des Manipulators 3. Insbesondere liegen der Steuervorrichtung 6 des Manipulators 3 die jeweiligen Lage-, Geschwindigkeits- und/oder Beschleunigungszustände des Manipulators 3 respektive des damit bewegten Objekts 2 zu jedem Zeitpunkt vor, sodass seitens der Orientierungsermittlungseinheit 8, 8' auch die hiermit in starrer Kopplung bzw. Wechselwirkung stehende Orientierung des Bewegungsvorgabemittels 5 in Bezug auf den dreidimensionalen Raum errechnet bzw. eruiert werden kann. Dadurch können bei Vorliegen des zweiten Betriebsmodus Drifteinflüsse seitens der Inertialsensoren 7 entweder völlig ausgeschlossen werden oder entsprechend der kurzen Zeitabstände der Aktualisierung anhand der Lageinformationen des Manipulators auf Dauer vernachlässigbar gering gehalten werden. Es kann so die Genauigkeit bzw. die Langzeitstabilität der Orientierungsermittlung in Bezug auf das Bewegungsvorgabemittel 5 erheblich verbessert werden.

Anhand der jeweils vorliegenden Orientierung des Bewegungsvorgabemittels 5, welches während des zweiten Betriebszustandes fest bzw. im Wesentlichen unnachgiebig mit dem zu bewegenden Objekt 2 verbunden ist, werden von der Steuervorrichtung 6, 6' - unter Berücksichtigung der Richtungs- bzw. Bewegungskommandos, welche von der Bedienperson via das Eingabemittel 17 des Bewegungsvorgabemittels 5 manuell eingegeben werden - Steuerkommandos bzw. Steuerbefehle für die diversen Antriebsvorrichtungen des Manipulators 3 generiert. Die diversen Antriebsvorrichtungen sind dabei insbesondere den jeweiligen Gelenksachsen des Manipulators 3 zugeordnet, wobei nicht immer alle der insgesamt vorhandenen Antriebsvorrichtungen angesteuert bzw. aktiviert werden müssen, um die vorgabegemäße Bewegung des Objekts 2 ausführen zu können. In Zusammenhang mit den erfindungsgemäßen Maßnahmen wird erreicht, dass die Richtungen der fortlaufenden Betätigungen des Bewegungsvorgabemittels 5 seitens der Bedienperson, insbesondere deren Zug-, Druck-, Kipp- oder Drehbeanspruchungen gegenüber dem Bewegungsvorgabemittel 5, den beabsichtigten Bewegungsrichtungen des Objekts 2 unmittelbar entsprechen und die Steuervorrichtung 6, 6' bzw. das System 1 die entsprechenden Betätigungsrichtungen derart umsetzt bzw. transformiert, dass die letztendliche Objektbewegungen in Bezug auf den dreidimensionalen Raum diesen am Bewegungsvorgabemittel 5 eingeleiteten Betätigungsrichtungen entsprechen, insbesondere gleichgerichtet sind bzw. zumindest parallel orientiert sind. Es kann auch steuerungstechnisch vorgesehen sein, dass eine Bewegung des Objekts 2 nur entlang einer bestimmten Trajektorie oder in einem bestimmten Kanal entlang einer solchen Trajektorie möglich ist bzw. dass bestimmte Freiheitsgrade gesperrt oder begrenzt sind, so dass eine gewünschte Bewegungsvorgabe nur teilweise, d.h. in Bezug auf freigegebenen Freiheitsgraden ausgeführt wird. Insgesamt wird dadurch für die Bedienperson eine besonders intuitive Steuerbarkeit bzw. Bewegungsvorgabe in Bezug auf den Manipulator 3 gewährleistet. Das entsprechende Steuerungsverfahren bzw. das hierfür implementierte Umrechnungs- und Transformationsverfahren ist nachstehend im Detail beschrieben.

Bei der Durchführung dieses Verfahrens spielen mehrere Koordinatensysteme und verschiedene Transformationsmatrizen zur Umrechnung der Koordinaten von Vektoren aus einem Koordinatensystem (Bezugssystem) in ein anderes Koordinatensystem eine besondere Rolle:

-   Ein Weltkoordinatensystem Kw, in welchem die Orientierung des Endeffektors 4 des Manipulators 3, als auch die Referenzorientierung für das Bewegungsvorgabemittel 5 bekannt bzw. bestimmbar sind.

-   Ein lokales Koordinatensystem $K_L$ des Bewegungsvorgabemittels 5. Dieses lokale Koordinatensystem $K_L$ ist starr mit dem Gehäuse des Bewegungsvorgabemittels 5 bzw. mit einem Bezugspunkt des Gerätes verknüpft. Die Richtung von Auslenkungen von Bedienelementen bzw. von Betätigungskräften der Bedienperson wird zunächst in diesem lokalen Koordinatensystem $K_L$ erfasst.

- Ein starr mit dem Endeffektor 4 und während der Fixierung eines Objekts 2 am Endeffektor 4 auch mit diesem Objekt 2 starr verknüpftes Effektorkoordinatensystem $K_E$. Die Orientierung dieses Effektorkoordinatensystems $K_E$, auch als Handkoordinatensystem bezeichnet, kann gegenüber dem Weltkoordinatensystem Kw jederzeit über die Winkelstellungen der Gelenke des Manipulators 3 ermittelt werden.

In einem ersten Schritt wird nun das Bewegungsvorgabemittel 5 in eine im Weltkoordinatensystem Kw bekannte bzw. bestimmbare Referenzorientierung gebracht. Diese Referenzorientierung ist durch die Ausrichtung eines Referenzkoordinatensystems $K_R$ gegenüber dem Weltkoordinatensystem Kw definiert. Sie kann als Transformationsmatrix $T_{WR}$ angegeben werden, oder beispielsweise auch in Form von drei Winkelangaben, die wiederum äquivalent in eine solche Transformationsmatrix umgerechnet werden können. Die Transformationsmatrix ermöglicht auch die Umrechnung der Darstellung eines beliebigen Richtungsvektors zwischen den beiden Koordinatensystemen.

Für die Koordinaten eines Vektors $\vec{a}_W$ im Weltkoordinatensystem Kw und desselben Vektors $\vec{a}_R$ im Referenzkoordinatensystem $K_R$ gilt nachfolgender Zusammenhang:

$$\vec{a}_W = T_{WR} \cdot \vec{a}_R \qquad \text{und} \qquad \vec{a}_R = T_{RW} \cdot \vec{a}_W$$

mit

$$\vec{a}_R = \begin{pmatrix} x_R \\ y_R \\ z_R \end{pmatrix} \qquad \vec{a}_W = \begin{pmatrix} x_W \\ y_W \\ z_W \end{pmatrix}$$

und

$$T_{WR} = \begin{pmatrix} t_{11} & t_{12} & t_{13} \\ t_{21} & t_{22} & t_{23} \\ t_{31} & t_{32} & t_{33} \end{pmatrix} \qquad T_{RW} = T_{WR}^{-1} = T_{WR}^{T} = \begin{pmatrix} t_{11} & t_{21} & t_{31} \\ t_{12} & t_{22} & t_{32} \\ t_{13} & t_{23} & t_{33} \end{pmatrix}$$

wobei $T^{-1}$ die Inverse der Matrix T bezeichnet und eine Koordinatentransformation in die jeweils umgekehrte Richtung erlaubt. Da es sich bei den beschriebenen Drehmatrizen mathematisch um sogenannte orthogonale Matrizen handelt, gilt für diesen Sonderfall außerdem, dass die Inverse einer solchen Matrix gleich der Transponierten der Matrix ist, was den Rechenaufwand für die Invertierung in der Praxis erheblich verringert bzw. praktisch eliminiert.

Ist das Bewegungsvorgabemittel 5 in Referenzrichtung (Referenzorientierung) ausgerichtet, beispielsweise wenn es in eine definierte Kalibrierlage mit vorgegebener entsprechender Ausrichtung verbracht wurde, so besitzt das lokale Koordinatensystem $K_L$ dieselbe Ausrichtung wie das Referenzkoordinatensystem $K_R$, so dass in dieser Lage die Betätigungsrichtung eines Bedienelementes, welche im Gerät mit Bezug auf dessen lokales Koordinatensystem $K_L$ erfasst wird, mit $T_{WR}$ in das Weltkoordinatensystem $K_W$ transformiert werden kann (diese entspricht der "ersten Transformationsmatrix" aus dem Verfahrensschritt c. des Verfahrensanspruches). Grundsätzlich könnte - obwohl hardwaretechnisch etwas aufwändiger bzw. insgesamt komplexer - anstatt der Einnahme einer vorab bekannten Kalibrierorientierung auch ein spezielles Verfahren zur einmaligen Bestimmung der Orientierung des Bewegungsvorgabemittels 5 ausgeführt werden, beispielsweise durch externe Sensoriken, wie etwa Kameras in Verbindung mit optisch wahrnehmbaren Markierungen, wobei die Orientierung im Weltkoordinatensystem $K_W$ von entweder der Kamera oder der Markierung bekannt ist und im Zuge des Kalibriervorganges die relative Orientierung des jeweils anderen Systems, welches mit dem Bewegungsvorgabemittel 5 verbunden ist, optisch ermittelt wird. Eine Kalibrierung könnte auch durch Aufsetzen des Bewegungsvorgabemittels 5 auf eine Fläche mit im Weltkoordinatensystem $K_W$ bekannter oder bestimmbarer Ausrichtung gemeinsam mit der über die Inertialsensoren 7 bestimmbaren Schwerkraftrichtung erfolgen, wobei die verwendete Kalibrierfläche nicht senkrecht auf die Schwerkraftrichtung liegen darf (nicht horizontal), sondern die Schwerkraftrichtung möglichst parallel oder in einem möglichst kleinen Winkel zu dieser Oberfläche liegen sollte. Das Ergebnis des Kalibriervorganges ist jedenfalls eine Transformationsmatrix $T_{WR}$ bzw. eine mathematisch dazu gleichwertige Darstellung.

Damit eine solche Betätigungsrichtung auch nach dem Verbringen des Bewegungsvorgabemittels 5 aus der Referenzorientierung in eine vom Benutzer frei wählbare Orientierung weiterhin in das Weltkoordinatensystem $K_w$ transformiert werden kann, ist die Transformationsmatrix $T_{WL}(n)$ in zeitdiskreten Schritten n um kleine Werte $\Delta T_L(n)$ zu aktualisieren, welche die Verdrehung des Bewegungsvorgabemittels 5 pro Zeitschritt beschreiben, welche aus den Messwerten der Inertialsensoren 7 ermittelt wird, wobei unterschiedliche Verfahren zur Anwendung kommen können, um Fehler und Unsicherheiten in den Messwerten möglichst gering zu halten und möglichst genaue Werte für $\Delta T_L(n)$ zu erhalten. Die einschlägige Fachliteratur zur Trägheitsnavigation liefert hierzu verschiedene Vorschläge.

Es gilt zu einem diskreten Zeitpunkt n:

$$\vec{a}_W(n) = T_{WL}(n) \cdot \vec{a}_L(n)$$

mit

$$T_{WL}(0) = T_{WR} \text{ und } T_{WL}(n+1) = T_{WL}(n) \cdot \Delta T_L(n)$$

Dies entspricht dem Aktualisieren der ersten Transformationsmatrix gemäß Verfahrensschritt d.

Nachdem nun das Bewegungsvorgabemittel 5 durch den Benutzer an eine für die weitere Handhabung geeignete Stelle an dem zu bewegenden Objekt 2 verbracht wurde und zu einem diskreten Zeitpunkt *k* am Objekt 2 über geeignete Mittel fixiert wurde, beispielsweise via Magnethalterung, Klettverschluss, Klebefläche oder mittels Saugnapf oder dergleichen, ist die Orientierung des Bewegungsvorgabemittels 5 abgesehen von den Mess- und Rechenungenauigkeiten durch den letztgültigen Wert der bis dahin fortlaufend aktualisierten Transformationsmatrix $T_{WL}(k)$ beschrieben und somit hinreichend genau bekannt. Dies insbesondere deshalb, weil die Zeitspanne zum Verbringen des Bewegungsvorgabemittels 5 aus der Referenzposition in die gewünschte Position am Objekt 2 üblicherweise kurz sein wird im Vergleich zur nachfolgenden Phase, in der das Objekt 2 entsprechend den Vorgaben der Bedienperson bewegt, eingerichtet und montiert wird. Demnach haben die Sensorfehler der Inertialsensoren 7 und die Integrationsfehler nur noch relativ geringe Auswirkung auf die Steuerungs- bzw. Bewegungsabläufe.

Das zu bewegende Objekt 2 wird spätestens ab diesem Zeitpunkt vom Endeffektor 4 bzw. von einem Greifer oder einer ähnlichen Halteeinrichtung des Manipulators 3 gegriffen und möglichst starr fixiert, um dann in der Folge vom Manipulator 3 in die von der Bedienperson gewünschte Richtung bewegt und gedreht werden zu können.

Die Steuervorrichtung 6, 6' des Manipulators 3 übermittelt spätestens ab diesem Zeitpunkt eine Information, über die Orientierung eines mit dem Endeffektor 4 starr verknüpften Effektorkoordinatensystems $K_E$, beispielsweise einem sogenannten Handkoordinatensystem, aus welchen eine Transformation von Vektoren zwischen dem Weltkoordinatensystem $K_w$ und dem Effektorkoordinatensystem $K_E$ abgeleitet werden kann. Üblicherweise werden diese Informationen bereits in Form einer Transformationsmatrix, beispielsweise $T_{WE}(k)$ bereitgestellt (dies ist die "zweite Transformationsmatrix" aus dem Verfahrensschritt f).

Während das zu bewegende Objekt 2 vom Manipulator 3 fixiert bzw. geführt wird, ist das Hand- bzw. Effektorkoordinatensystem $K_E$ gleichzeitig auch ein mit dem Objekt 2 starr verknüpftes Objektkoordinatensystem, mit dem wiederum, solange das Bewegungsvorgabemittel 5 mechanisch an das Objekt 2 gekoppelt ist, das lokale Koordinatensystem $K_L$ des Bewegungsvorgabemittels 5 starr gekoppelt ist.

Es kann nun (während das Objekt 2 mit dem Manipulator 3 und dem Bewegungsvorgabemittel 5 gekoppelt ist) eine konstante Transformationsmatrix $T_{EL}$ für die Transformation eines Richtungsvektors aus dem lokalen Koordinatensystem $K_L$ des Bewegungsvorgabemittels 5 in das Effektorkoordinatensystem $K_E$ angegeben werden (die "dritte Transformationsmatrix" aus Verfahrensschritt g.)

Es gilt:

$$T_{EL} = T_{EW}(k) \cdot T_{WL}(k) = T_{WE}^{-1}(k) \cdot T_{WL}(k)$$

Während des Vorliegens einer fixen Kopplung des Objekts 2 mit dem Bewegungsvorgabemittel 5 und mit dem Manipulator 3 kann nun zu jedem diskreten Zeitpunkt *m* eine Transformationsmatrix für die Transformation eines Richtungsvektors aus dem lokalen Koordinatensystem $K_L$ in das Weltkoordinatensystem $K_w$ angegeben werden, welche nicht mehr aus den Daten der Inertialsensoren 7 bestimmt werden muss und die auch keine numerisch oder algorithmisch bedingte Fehleranhäufung verursacht, weil sie ausschließlich aus den bekannten Gelenkswinkeln des Manipulators 3 bzw. von der Kinematik des Manipulators 3 bestimmbar ist.

Es gilt:

$$T_{WL}(m) = T_{WE}(m) \cdot T_{EL}$$

Falls das Bewegungsvorgabemittel 5 zwischenzeitlich wieder vom Objekt 2 gelöst und beispielsweise von der Bedienperson an eine andere, für den jeweiligen Montageschritt geeignetere und ergonomisch günstigere Position am Objekt 2 verbracht wird, wird in dieser Phase die Änderung der $T_{WL}(m)$ wieder basierend auf den Messwerten der Inertialsensoren 7 im Bewegungsvorgabemittel 5 und den daraus abgeleiteten, inkrementellen Orientierungsänderungen $\cdot \Delta T_L(m)$ ermittelt und beim Wiederanbringen des Bewegungsvorgabemittels 5 am Objekt 2 erneut eine konstante Matrix $T_{EL}$ ermittelt.

Zwischen den diskreten Zeitpunkten $m$, $m + 1$, ... kann die Matrix $T_{WL}$ oder die Matrix $T_{WE}$ für zeitlich feiner aufgelöste oder verschobene Zwischenzeitpunkte auch aus dem Verlauf jeweils vergangener Werte extrapoliert oder auch unter Rückgriff auf die Sensorsignale der Inertialsensoren 7 analog zum ersten Betriebsmodus aktualisiert werden. Dies kann dann zweckmäßig sein, wenn die Daten von der Steuerungseinrichtung 6 nicht mit der für die Übermittlung der Bewegungskommandos erforderlichen Frequenz bzw. nicht zu den geforderten Zeitpunkten zur Verfügung stehen sollten. Erfindungsgemäß wesentlich ist jedoch, dass die zeitlichen Abstände jener Aktualisierungszeitpunkte $m$, $m + 1$, ..., zu denen eine Orientierungsbestimmung anhand der Informationen von der Manipulatorsteuerung 6 erfolgt, kurz sind und dass zu jedem dieser Aktualisierungszeitpunkte die bis dahin aufgelaufenen Drift-oder Extrapolationsfehler wieder egalisiert werden, so dass diese Fehler stets nur ein vernachlässigbar geringes Ausmaß erreichen können, auch wenn das Bewegungsvorgabemittel 5 beliebig lange mit dem Objekt 2 gekoppelt und im zweiten Betriebsmodus betrieben wird.

Die der Steuervorrichtung 6 bekannte bzw. datentechnisch darin abgebildete Referenzorientierung für das Bewegungsvorgabemittel 5 kann beispielsweise durch eine horizontale Auflagefläche bzw. durch eine podestartige Abstützfläche für das Bewegungsvorgabemittel 5 definiert sein, wie dies in Fig. 1 schematisiert veranschaulicht wurde. Damit ist beispielsweise Parallelität zur z-Achse im Weltkoordinatensystem $K_W$ des Manipulators 3 gegeben bzw. Parallelität in Bezug auf eine Polachse bzw. Zenitrichtung (Schwerkraftrichtung) gegeben. Um auch den Ausrichtungswinkel um diese Achse zu definieren, kann ein vordefiniertes Kennzeichen, beispielsweise eine Abflachung, eine Abschrägung oder ein Fortsatz am Bewegungsvorgabemittel 5 ausgebildet sein, welches Kennzeichen mit einem korrespondierenden bzw. gegengleichen Kennzeichen in Ausrichtung zu bringen ist. Wenn das Bewegungsvorgabemittels 5 diese vordefinierte räumliche Orientierung (Ausrichtung) einnimmt, befindet sich das Bewegungsvorgabemittel 5 in Referenzorientierung, welche im System 1 bzw. in der Steuervorrichtung 6 datentechnisch hinterlegt ist. Bei Einnahme dieser Referenzorientierung befindet sich dann das lokale Koordinatensystem $K_L$ des Bewegungsvorgabemittels 5 in definierter Ausrichtung, das heißt in bekannter Korrelation zum Weltkoordinatensystem $K_W$ des Manipulators 3. Die Referenzorientierung kann aber auch durch eine bestimmte Stelle bzw. Kante am zu bewegenden Objekt 2 definiert sein, oder durch eine bestimmte Stelle bzw. Kante am Manipulator 3 selbst gebildet sein. Wesentlich ist, dass die Ausrichtung des Bewegungsvorgabemittels 5 in Bezug auf den dreidimensionalen Raum bei Einnahme der Referenzorientierung eindeutig definiert ist und diese Ausrichtung der Steuervorrichtung 6 des Manipulators 3 bekannt oder durch diese bestimmbar ist.

Die vorstehend beschriebenen Vektorberechnungen bzw. Koordinatentransformationen erfolgen zweckmäßigerweise in der Steuervorrichtung 6 des Manipulators 3, wobei zumindest Vorverarbeitungen der entsprechenden Daten bzw. Signale auch in der Steuervorrichtung 6' des Bewegungsvorgabemittels 5 ausgeführt werden können.

Für die datentechnische Kommunikation zwischen den Steuervorrichtungen 6, 6' ist vorteilhafterweise eine drahtlose Kommunikationsverbindung 10 vorgesehen. Diese drahtlose Kommunikationsverbindung 10 umfasst korrespondierende, funktechnische Sende- und Empfangseinrichtungen 11, 11' auf Seiten der Steuervorrichtung 6 und auf Seiten des Bewegungsvorgabemittels 5. Insbesondere kann mit diesen Sende- und Empfangsvorrichtungen 11, 11' eine Funkverbindung zwischen den genannten Komponenten aufgebaut werden, wodurch die Benutzungsergonomie bzw. Praktikabilität des Systems 1 begünstigt wird. Die datentechnische Kommunikation via diese funktechnische Kommunikationsverbindung 10 kann dabei beispielsweise nach dem Bluetooth-, WLAN-, oder Zig-Bee-Standard bzw. gemäß sonstigen Kommunikationsstandards vorgenommen werden.

Nachdem die Funktionalitäten bzw. Abläufe der Steuervorrichtung 6, 6' bzw. der darin implementierten Orientierungsermittlungseinheit 8, 8' bzw. des darin implementierten Detektierungsmittels 9, 9' softwarebasierend umsetzbar sind, können eine Reihe von Evaluierungs-, Überprüfungs- und Plausibilisierungsmaßnahmen vorgenommen werden, wie sie im einleitenden Teil der vorliegenden Erfindungsbeschreibung erläutert sind. Mit diesen zweckmäßigen Auswertungs- bzw. Plausibilisierungsmaßnahmen kann die Funktionalität, Praktikabilität, Systemsicherheit und/oder Positioniergenauigkeit des angegebenen technischen Systems 1 gesteigert werden.

In baulicher Hinsicht kann am Bewegungsvorgabemittel 5 zumindest ein von der Bedienperson betätigbares Schaltelement 12 ausgebildet sein, mit welchem Schaltelement 12 der Steuervorrichtung 6, 6' eine durchgeführte Kopplung des Bewegungsvorgabemittels 5 gegenüber dem Objekt 2 und zudem eine Bereitschaft zur Ausführung von Bewegungen des Objekts 2 via den Manipulator 3 signalisierbar ist. Dieses Schaltelement 12 ist zweckmäßigerweise durch ein Tast-Schaltelement definiert und an einer für die Bedienperson gut zugänglichen Stelle an der Oberfläche des Bewegungsvorgabemittels 5 angeordnet.

Um die funktionale Sicherheit bzw. Systemsicherheit zu erhöhen, kann der Steuervorrichtung 6 des Manipulators 3 auch eine eigens programmierte Sicherheitssteuerung 13 zugeordnet sein. Diese Sicherheitssteuerung 13 kann baulich eigenständig ausgeführt sein, oder eine mit der Steuervorrichtung 6 hardwaretechnisch kombinierte Baueinheit darstellen. Die Sicherheitssteuerung 13 ist dabei insbesondere zur Überwachung sicherheitsrelevanter Zustände und zum Empfangen bzw. Auswerten sicherheitsrelevanter Signale bzw. Sperrsignale vorgesehen.

Ferner kann am Bewegungsvorgabemittel 5 zumindest ein Eingabemittel 14, insbesondere in Art eines Zustimmtasters 15, ausgebildet sein. Dieses Eingabemittel 14 ist für eine seitens der Bedienperson bewusst zu initiierende Freischaltung bzw. Freigabe von Bewegungen des Manipulators 3 vorgesehen. Dieses Eingabemittel 14 ist insbesondere in Abhängigkeit von seinem Betätigungszustand zur Generierung eines Freigabesignals und zur Übermittlung dieses an die Steuervorrichtung 6 oder an eine Sicherheitssteuerung 13 des Manipulators 3 vorgesehen.

Zur bedarfsweise lösbaren Verbindung mit dem zu bewegenden Objekt 2 ist am Bewegungsvorgabemittel 5 zumindest eine bedarfsweis aktivier- und deaktivierbare Kopplungsvorrichtung 16 ausgebildet. Diese Kopplungsvorrichtung 16 ist für die temporäre Herstellung einer bedarfsweise lösbaren Verbindung gegenüber dem Objekt 2 und zur Übertragung von Kräften und Momenten zwischen dem Objekt 2 und dem Bewegungsvorgabemittel 5 eingerichtet. Die entsprechende Kopplungsvorrichtung 16 kann durch eine mechanische Klemm- oder Steckverbindung und/oder durch wenigstens einen Saugnapf und/oder durch eine Magnethalterung und/oder durch eine Adhäsions- oder Klebefläche zum mehrmaligen bedarfsweise lösbaren Ankleben am Objekt 2 gebildet sein. Die Kopplungsvorrichtung 16 kann auch durch eine am Bewegungsvorgabemittel 5 ausgebildete Abstützeinrichtung gebildet sein, welche von der Bedienperson gegen die Oberfläche des Objekts 2 gedrängt wird und welche durch Reibung auch Kräfte und Momente quer zur Anpressrichtung übertragen kann, wobei der vom Benutzer aufgebrachte Anpressdruck nach Freigabe der Roboterbewegung regelungstechnisch aufrechterhalten wird und damit das Objekt 2 den Bewegungsvorgaben der Bedienperson folgt.

Weiters umfasst das Bewegungsvorgabemittel 5 zumindest ein von der Bedienperson betätigbares bzw. beeinflussbares Eingabemittel 17 auf Basis von Schaltkontakten, vorzugsweise jedoch auf sensorischer Basis zur Erfassung von Betätigungsbewegungen bzw. Betätigungskräften, wie dies aus dem Stand der Technik bekannt ist. Dieses wenigstens eine Eingabemittel 17 dient zur Erfassung von Steuerkommandos bzw. von Betätigungshandlungen seitens der Bedienperson. Diesem Eingabemittel 17, welches vorzugsweise aus einer Mehrzahl von Sensoren zur Erfassung von Kräften, Drücken oder sonstigen physikalischen Größen gebildet ist, sind Bewegungsrichtungen in Bezug auf das gerätefeste, lokale Koordinatensystem $K_L$ des Bewegungsvorgabemittels 5 zugeordnet. Das Automatisierungssystem 1 ist dann dazu eingerichtet, in Abhängigkeit von der Orientierung des lokalen Koordinatensystems $K_L$ im Weltkoordinatensystem Kw des Manipulators 3 eine Umrechnung oder Transformation dieser Bewegungsrichtungen in Bezug auf das lokale Koordinatensystem $K_L$ des Bewegungsvorgabemittels 5 in äquivalente oder gleich orientierte Bewegungsrichtungen in Bezug auf das Weltkoordinatensystem Kw des Manipulators 3 vorzunehmen, wie dies vorhergehend im Detail beschrieben wurde.

Das Bewegungsvorgabemittel 5 kann weiters ein Eingabeelement 18 aufweisen, durch dessen Betätigung ein Wechsel vom ersten in den zweiten oder vom zweiten in den ersten Betriebsmodus seitens der Bedienperson entweder unmittelbar veranlassbar ist, oder mit welchem Eingabeelement 18 vordefinierte Grenzwerte für einen automatischen Wechsel des Betriebsmodus vorübergehend bewusst so veränderbar sind, dass dieser Wechsel des Betriebsmodus rascher erfolgt, oder dass eine Betätigung dieses Eingabeelements 18 als zusätzliche Information für eine steuerungstechnische Plausibilisierung eines automatisch veranlassten Wechsels des Betriebsmodus miteinbezogen ist. Ferner kann das Bewegungsvorgabemittel 5 wenigstens ein visuell erfassbares Anzeigeelement 19 aufweisen, welches Anzeigeelement 19 dazu eingerichtet ist, einer Bedienperson zu signalisieren, ob sich das System 1 im ersten oder im zweiten Betriebszustand befindet.

Gemäß einer Ausführungsform ist es auch möglich, dass das Bewegungsvorgabemittel 5 bzw. dessen Detektierungsmittel 9' einen Sensor 20 umfasst und das zu bewegende Objekt eine von diesem Sensor 20 detektierbare Markierung oder Kennung aufweist. In diesem Zusammenhang ist das Detektierungsmittel 9' dazu ausgebildet, im Falle einer Erfassung der Markierung oder Kennung durch den Sensor 20 das Bewegungsvorgabemittel 5 in den zweiten Betriebsmodus zu versetzen. Gegebenenfalls kann auch eine Speichereinheit 21, 21' vorgesehen sein, welche für die Speicherung von Korrekturwerten vorgesehen ist, die von der Orientierungsermittlungseinheit 8, 8' auslesbar bzw. verwertbar sind. Insbesondere kann vorgesehen sein, dass die Orientierungsermittlungseinheit 8, 8' die Sensorsignale der Inertialsensoren 7 im Zuge der Berechnung der Bewegungsinformationen mit diesen Korrekturwerten rechnerisch korrigiert, um so eine exaktere bzw. längerfristig nutzbare Bewegungs- bzw. Orientierungsermittlung zu erzielen.

Um die steuerungstechnischen Operationen innerhalb des mobilen Bewegungsvorgabemittels 5 ausführen zu können, ist im Gehäuse desselben zumindest eine elektrochemische Energiequelle 22, beispielsweise eine Batterie oder ein wiederaufladbarer Akkumulator vorgesehen. Eine Aufladung dieser elektrochemischen Energiequelle kann über elektrische Kontakte oder über induktive Kopplung erfolgen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

1 System
2 Objekt
3 Manipulator
4 Endeffektor
5 Bewegungsvorgabemittel

6, 6' Steuervorrichtung
7 Inertialsensoren
8, 8' Orientierungsermittlungseinheit
9, 9' Detektierungsmittel
10 Kommunikationsverbindung

11, 11' Sende- und Empfangsvorrichtung
12 Schaltelement
13 Sicherheitssteuerung
14 Eingabemittel
15 Zustimmtaster

16 Kopplungsvorrichtung
17 Eingabemittel
18 Eingabeelement
19 Anzeigeelement
20 Sensor

21, 21' Speichereinheit
22 Energiequelle

Kw Weltkoordinatensystem
$K_L$ lokales Koordinatensystem
$K_E$ Effektorkoordinatensystem
$K_R$ Referenzkoordinatensystem

**Patentansprüche**

1. System (1) zur räumlichen Bewegung eines Objekts (2) mittels einem Manipulator (3), welches Objekt (2) zumindest vorübergehend mit dem Manipulator (3) bewegungsgekoppelt ist, mit einem Bewegungsvorgabemittel (5), welches von einer Bedienperson zumindest zeitweilig händisch frei im Raum bewegbar ist, und welches Bewegungsvorgabemittel (5) zumindest zeitweilig zur körperlichen Kopplung mit dem zu bewegenden Objekt (2) vorgesehen ist, in welchem Kopplungszustand das Bewegungsvorgabemittel (5) für die Abgabe von Bewegungskommandos seitens der Bedienperson an eine Steuervorrichtung (6, 6') des Manipulators (3) vorgesehen ist,
mit Inertialsensoren (7) im Bewegungsvorgabemittel (5) zur Erfassung zumindest von Orientierungsveränderungen des Bewegungsvorgabemittels (5),
mit einer Orientierungsermittlungseinheit (8, 8') zur fortlaufenden Ermittlung der wechselnden Orientierungen des Bewegungsvorgabemittels (5) im Raum,
wobei die steuerungstechnische Ausführung von zumindest einem der Bewegungskommandos zumindest teilweise von der Orientierung des Bewegungsvorgabemittels (5) abhängig ist,
und mit einem Detektierungsmittel (9, 9'), welches das System (1) in einen ersten Betriebsmodus versetzt, wenn das Bewegungsvorgabemittel (5) händisch frei im Raum bewegt wird und welches Detektierungsmittel (9, 9') das System (1) in einen zweiten Betriebsmodus versetzt, wenn die Orientierung des Bewegungsvorgabemittels (5) infolge mechanischer Kontaktierung oder Kopplung mit dem Objekt (2) definiert ist,
**dadurch gekennzeichnet, dass**
im ersten Betriebsmodus die Orientierungsermittlungseinheit (8, 8') die wechselnden Orientierungen des Bewegungsvorgabemittels (5) basierend auf Signalen der Inertialsensoren (7) im Bewegungsvorgabemittel (5) berechnet, und im zweiten Betriebsmodus die Orientierungsermittlungseinheit (8, 8') die wechselnden Orientierungen des Bewegungsvorgabemittels (5) zumindest zu definiert kurz beabstandeten Zeitpunkten ausschließlich basierend auf Informationen von Seiten der Steuervorrichtung (6) über die ihr bekannten Lagezustände oder Lageänderungen des von der Steuervorrichtung (6) angesteuerten Manipulators (3) respektive des entsprechend bewegten Objekts (2) berechnet.

2. System nach Anspruch 1, **dadurch gekennzeichnet, dass** das Detektierungsmittel (9, 9') einen Sensor (20) umfasst und das Objekt (2) eine von diesem Sensor (20) detektierbare Markierung oder Kennung aufweist, wobei das Detektierungsmittel (9, 9') dazu ausgebildet ist, infolge einer Erfassung der Markierung oder Kennung durch den Sensor (20) das System (1) in den zweiten Betriebsmodus zu versetzen.

3. System nach Anspruch 1 oder 2, **dadurch gekennzeichnet, dass** am Bewegungsvorgabemittel (5) ein von der Bedienperson betätigbares Schaltelement (12) ausgebildet ist, mit welchem Schaltelement (12) der Steuervorrichtung (6, 6') eine durchgeführte Kopplung des Bewegungsvorgabemittels (5) gegenüber dem Objekt (2) und zudem eine Bereitschaft zur Durchführung von Bewegungen des Objekts (2) via den Manipulator (3) signalisierbar ist.

4. System nach einem der vorhergehenden Ansprüche, **dadurch gekennzeichnet, dass** das Detektierungsmittel (9, 9') dazu ausgebildet ist, die Signale der Inertialsensoren (7) während eines definierten Beobachtungszeitraums auszuwerten, und dass das Detektierungsmittel (9, 9') dazu eingerichtet ist, für jenen Fall, dass diese Signale bezüglich der Beschleunigung des Bewegungsvorgabemittels (5) und/oder bezüglich der aus dieser Beschleunigung errechnete Geschwindigkeitsänderung des Bewegungsvorgabemittels (5) und/oder bezüglich der Positions- oder Orientierungsveränderung des Bewegungsvorgabemittels (5) während dem definierten Beobachtungszeitraum unterhalb eines definierten ersten Grenzwertes und/oder unterhalb einer definierten Schwankungsbreite bleiben, das System (1) in den zweiten Betriebsmodus zu versetzen.

5. System nach einem der vorhergehenden Ansprüche, **dadurch gekennzeichnet, dass** die bewegungsbedingten Änderungen der Orientierung des Objekts (2) durch den Manipulator (3) festgelegt sind, und dass die Steuervorrichtung (6) des Manipulators (3) Informationen über die Orientierung oder über die fortlaufenden Änderungen der Orientierung des Objekts (2) an die Orientierungsermittlungseinheit (8, 8') übermittelt oder für die Orientierungsermittlungseinheit (8, 8') bereitstellt, und dass die Orientierungsermittlungseinheit (8, 8') dazu ausgebildet ist, im zweiten Betriebsmodus die fortlaufend sich verändernden Orientierungen des Bewegungsvorgabemittels (5) basierend auf den von der Steuervorrichtung (6) des Manipulators (3) übermittelten oder bereitgestellten Informationen zu ermitteln.

6. System nach einem der vorhergehenden Ansprüche, **dadurch gekennzeichnet, dass** das Detektierungsmittel (9, 9') dazu ausgebildet ist, an die Steuervorrichtung (6) oder an eine eigenständige Sicherheitssteuerung (13) des Manipulators (3) ein erstes Sperrsignal zu übermitteln, welches die Ausführung von Bewegungen des Manipulators (3) unterbindet, wenn das Detektierungsmittel (9, 9') detektiert, dass das Bewegungsvorgabemittel (5) händisch frei im Raum bewegt wird.

7. System nach einem der vorhergehenden Ansprüche, **dadurch gekennzeichnet, dass** die Orientierung des Objekts (2) durch eine jeweils eingenommene Pose des Manipulators (3) bestimmt ist und die Steuervorrichtung (6) des Manipulators (3) Informationen über die Orientierung oder über die fortlaufenden Änderungen der Orientierung des Objekts (2) an das Detektierungsmittel (9, 9') übermittelt, und dass das Detektierungsmittel (9, 9') dazu ausgebildet ist, diese Informationen über die Bewegung des Objekts (2) mit den Bewegungsinformationen seitens der Inertialsensoren (7) zu vergleichen, und dass das Detektierungsmittel (9, 9') weiters dazu ausgebildet ist, das System (1) in den ersten Betriebsmodus zu versetzen, wenn eine Abweichung der Beschleunigung oder der daraus abgeleiteten Rotationsgeschwindigkeit oder der Winkeländerung zwischen (i) den Informationen seitens der Steuervorrichtung (6) und (ii) den sensorischen Informationen seitens des Bewegungsvorgabemittels (5) einen definierten zweiten Grenzwert überschreitet.

8.  System nach Anspruch 7, **dadurch gekennzeichnet, dass** das Detektierungsmittel (9, 9') dazu ausgebildet ist, den Vergleich zwischen (i) den steuerungsseitigen Informationen über die Bewegung des Objekts (2) und (ii) den Bewegungsinformationen basierend auf den Inertialsensoren (7) betragsmäßig, also gemäß dem Betrag der jeweiligen Parameterwerte, durchzuführen.

9.  System nach Anspruch 7, **dadurch gekennzeichnet, dass** das Detektierungsmittel (9, 9') dazu ausgebildet ist, den Vergleich zwischen (i) den steuerungsseitigen Informationen über die Bewegung des Objekts (2) und (ii) den Bewegungsinformationen basierend auf den Inertialsensoren (7) vektoriell unter Berücksichtigung der Richtungskomponenten der Bewegungsinformationen durchzuführen.

10.  System nach einem der vorhergehenden Ansprüche, **dadurch gekennzeichnet, dass** eine Speichereinheit (21, 21') mit für die Orientierungsermittlungseinheit (8, 8') zugreifbaren Korrekturwerten vorgesehen ist und die Orientierungsermittlungseinheit (8, 8') dazu ausgebildet ist, die Sensorwerte der Inertialsensoren (7) im Zuge der Berechnung der Bewegungsinformationen mit diesen Korrekturwerten rechnerisch zu korrigieren.

11.  System nach Anspruch 10, **dadurch gekennzeichnet, dass** die Orientierung des Objekts (2) durch die jeweils eingenommene Pose des Manipulators (3) bestimmt ist und die Steuervorrichtung (6) des Manipulators (3) Informationen über die Orientierung oder über die fortlaufenden Änderungen der Orientierung des Objekts (2) an die Orientierungsermittlungseinheit (8, 8') übermittelt oder an diese bereitstellt, und dass die Orientierungsermittlungseinheit (8, 8') dazu ausgebildet ist, diese Informationen über die Bewegung des Objekts (2) mit den Bewegungsinformationen seitens der Inertialsensoren (7) zu vergleichen, und dass die Orientierungsermittlungseinheit (8, 8') weiters dazu ausgebildet ist, die Korrekturwerte für die rechnerische Korrektur der Sensorwerte der Inertialsensoren (7) derart anzupassen, dass eine Abweichung der Bewegungsinformationen aus den mit den Korrekturwerten korrigierten Sensorwerten gegenüber den Bewegungsinformationen zufolge der Informationen von der Steuervorrichtung (6) des Manipulators (3) minimiert ist.

12.  System nach einem der vorhergehenden Ansprüche, **dadurch gekennzeichnet, dass** ein Kollisionserkennungsmittel vorgesehen ist oder das Detektierungsmittel (9, 9') dazu eingerichtet ist, die Signale der Inertialsensoren (7) auszuwerten und mit einem dritten Grenzwert zu vergleichen, und dass das Kollisionserkennungsmittel oder das Detektierungsmittel (9, 9') weiters dazu ausgebildet ist, ein Sperrsignal an die Steuervorrichtung (6) oder an eine eigenständige Sicherheitssteuerung (13) des Manipulators (3) zu übermitteln, welches Sperrsignal eine Bewegung des Manipulators (3) unterbindet, wenn der dritte Grenzwert überschritten ist.

13.  System nach einem der vorhergehenden Ansprüche, **dadurch gekennzeichnet, dass** ein Impulserkennungsmittel vorgesehen ist oder das Detektierungsmittel (9, 9') dazu eingerichtet ist, die Signale der Inertialsensoren (7) auszuwerten und mit einem vierten Grenzwert zu vergleichen, und dass das Impulserkennungsmittel oder das Detektierungsmittel (9, 9') weiters dazu ausgebildet ist, ein Bewegungskommando an die Steuervorrichtung (6) des Manipulators abzusetzen, durch welches Bewegungskommando eine definiert begrenzte Bewegung des vom Manipulator (3) geführten Objekts (2) in Richtung der festgestellten Beschleunigung ausgelöst wird.

14.  System nach einem der vorhergehenden Ansprüche, **dadurch gekennzeichnet, dass** das Bewegungsvorgabemittel (5) zumindest ein Eingabemittel (14) in Art eines Zustimmtasters (15) umfasst, welches Eingabemittel (14) für eine von der Bedienperson bewusst zu initiierende Freischaltung von Bewegungen des Manipulators (3) vorgesehen ist, und dieses Eingabemittel (14) in Abhängigkeit von seinem Betätigungszustand zur Generierung eines Freigabesignals und zur Übermittlung an die Steuervorrichtung (6) oder an eine Sicherheitssteuerung (13) des Manipulators (3) eingerichtet ist.

15.  System nach einem der vorhergehenden Ansprüche, **dadurch gekennzeichnet, dass** das Bewegungsvorgabemittel (5) eine bedarfsweise aktivier- und deaktivierbare Kopplungsvorrichtung (16) aufweist, welche Kopplungsvorrichtung (16) für die zeitweilige Herstellung einer bedarfsweise lösbaren Verbindung gegenüber dem Objekt (2)

und zur Übertragung von Kräften und Momenten zwischen dem Objekt (2) und dem Bewegungsvorgabemittel (5) vorgesehen ist.

16. System nach Anspruch 15, **dadurch gekennzeichnet, dass** die Kopplungsvorrichtung (16) eine mechanische Klemm- oder Steckverbindung und/oder einen Saugnapf und/oder eine Magnethalterung und/oder eine Adhäsions- oder Klebefläche zum mehrmaligen, bedarfsweise lösbaren Ankleben am Objekt (2) umfasst.

17. System nach einem der vorhergehenden Ansprüche, **dadurch gekennzeichnet, dass** das Bewegungsvorgabemittel (5) zumindest ein von der Bedienperson betätigbares oder beeinflussbares Eingabemittel (17)) zum Auslösen einer Bewegung des Manipulators (3) aufweist, welchem Eingabemittel (17) eine Bewegungsrichtung in Bezug auf ein gerätefestes, lokales Koordinatensystem ($K_L$) des Bewegungsvorgabemittels (5) zugeordnet ist, wobei das System (1) dazu eingerichtet ist, in Abhängigkeit von der Orientierung des lokalen Koordinatensystems ($K_L$) in einem Weltkoordinatensystem (Kw) des Manipulators (3) eine Umrechnung oder Transformation dieser Bewegungsrichtung in Bezug auf das lokale Koordinatensystem ($K_L$) in eine äquivalente oder gleich orientierte Bewegungsrichtung in Bezug auf das Weltkoordinatensystem (Kw) des Manipulators (3) auszuführen.

18. System nach einem der vorhergehenden Ansprüche, **dadurch gekennzeichnet, dass** das Bewegungsvorgabemittel (5) ein Eingabeelement (18) aufweist, durch dessen Betätigung ein Wechsel vom ersten in den zweiten oder vom zweiten in den ersten Betriebsmodus seitens der Bedienperson entweder unmittelbar veranlassbar ist, oder mit welchem Eingabeelement (18) vordefinierte Grenzwerte für einen automatischen Wechsel des Betriebsmodus vorübergehend bewusst so veränderbar sind, dass dieser Wechsel des Betriebsmodus rascher erfolgt, oder dass eine Betätigung dieses Eingabeelementes (18) als zusätzliche Information für eine steuerungstechnische Plausibilisierung eines automatisch veranlassten Wechsels des Betriebsmodus miteinbezogen ist.

19. System nach einem der vorhergehenden Ansprüche, **dadurch gekennzeichnet, dass** das Bewegungsvorgabemittel (5) ein Anzeigeelement (19) aufweist, welches Anzeigeelement (19) dazu eingerichtet ist, einer Bedienperson zu signalisieren, ob sich das System (1) im ersten oder im zweiten Betriebsmodus befindet.

20. System nach einem der vorhergehenden Ansprüche, **dadurch gekennzeichnet, dass** das Bewegungsvorgabemittel (5) über eine drahtlos aufgebaute Kommunikationsverbindung (10), insbesondere eine Funkverbindung, mit der Steuervorrichtung (6) des Manipulators (3) datentechnisch koppelbar ist.

21. Verfahren zum räumlichen Bewegen eines Objekts (2) mittels einem durch eine elektronische Steuervorrichtung (6, 6') gesteuerten Manipulator (3), insbesondere einem Industrieroboter, umfassend die Schritte:

  a) Herstellen einer zumindest zeitweiligen Bewegungskopplung des zu bewegenden Objekts (2) mit einem Endeffektor (4) des Manipulators;
  b) Verbringen eines von einer Bedienperson zumindest zeitweilig händisch frei im Raum bewegbaren Bewegungsvorgabemittels (5) mit darin baulich integrierten Inertialsensoren (7) in eine Referenzorientierung, welche Referenzorientierung in Bezug auf ein Weltkoordinatensystem (Kw) des Manipulators (3) vorbestimmt und der Steuervorrichtung (6, 6') bekannt ist, oder welche Referenzorientierung durch die Steuervorrichtung (6, 6') rechnerisch eruierbar ist;
  c) Berechnen einer ersten Transformationsmatrix für die Transformation von Richtungsvektoren zwischen einem auf das Bewegungsvorgabemittel (5) bezogenen, lokalen Koordinatensystem ($K_L$) des in Referenzorientierung ausgerichteten Bewegungsvorgabemittels (5) und dem Weltkoordinatensystem (Kw) des Manipulators (3);
  d) Verbringen des Bewegungsvorgabemittels (5) durch die Bedienperson ausgehend von dessen Referenzorientierung an eine beliebige, von der Bedienperson gewünschte Stelle auf dem vom Manipulator (3) zu bewegenden Objekt (2), wobei die erste Transformationsmatrix anhand der Sensorsignale der Inertialsensoren (7) entsprechend der Änderung der Orientierung des Bewegungsvorgabemittels (5) aktualisiert wird;
  e) Herstellen einer körperlichen Kopplung respektive einer starren Bewegungsverbindung zwischen dem Bewegungsvorgabemittel (5) und dem zu bewegenden Objekt (2) durch die Bedienperson;
  f) Bereitstellen einer zweiten Transformationsmatrix durch die Steuervorrichtung (6, 6') des Manipulators (3), welche eine Transformation von Richtungsvektoren zwischen dem Weltkoordinatensystem (Kw) des Manipulators (3) und einem starr mit dem Endeffektor (4) assoziierten Effektorkoordinatensystem ($K_E$) entsprechend der zum Koppelzeitpunkt vorliegenden Pose des Manipulators (3) ermöglicht;
  g) Bestimmen einer dritten Transformationsmatrix aus der ersten und zweiten Transformationsmatrix, welche dritte Transformationsmatrix eine Transformation von Richtungsvektoren zwischen dem lokalen Koordinatensystem ($K_L$) des Bewegungsvorgabemittels (5) und dem mit dem Endeffektor (4) starr assoziierten Effektorkoordinatensystem (K$_E$) ermöglicht;

h) fortlaufende Betätigungen des Bewegungsvorgabemittels (5) durch die Bedienperson in jene Betätigungsrichtungen, welche den beabsichtigten Bewegungsrichtungen des Objekts (2) zumindest teilweise entsprechen und Erfassung von Richtungsinformationen über die am Bewegungsvorgabemittel (5) fortlaufend vorgenommenen Betätigungshandlungen der Bedienperson, sowie wiederholte Bereitstellung einer gemäß der zum Bereitstellungszeitpunkt jeweils aktuell vorliegenden Pose des Manipulators (3) aktualisierten zweiten Transformationsmatrix durch die Steuervorrichtung (6, 6') und fortlaufende Transformation dieser Richtungsinformationen mittels der zweiten und der dritten Transformationsmatrix in das Weltkoordinatensystem (K$_W$) des Manipulators (3) und Einleitung von Bewegungen des Manipulators (3) durch dessen Steuervorrichtung (6) derart, dass Bewegungsrichtungen des Objekts (2) den von der Bedienperson am Bewegungsvorgabemittel (5) eingeleiteten Betätigungsrichtungen zumindest teilweise entsprechen.

22. Verfahren nach Anspruch 21, **dadurch gekennzeichnet, dass** in Schritt h) zwischen den Bereitstellungszeitpunkten der von der Steuervorrichtung (6, 6') bereitgestellten aktualisierten zweiten Transformationsmatrix eine Aktualisierung dieser zweiten Transformationsmatrix, oder der Gesamtheit aus der zweiten und dritten Transformationsmatrix basierend auf einer Extrapolation aus zeitlich vorausgegangenen Werten, oder basierend auf den Signalen der Inertialsensoren (7) erfolgt.

23. Verfahren nach Anspruch 21 oder 22, **gekennzeichnet durch** eine Betätigung des Bewegungsvorgabemittels (5) seitens der Bedienperson durch Zug-, Druck-, Kipp- oder Drehbeanspruchungen gegenüber dem Bewegungsvorgabemittel (5) in jene Betätigungsrichtungen, welche den von der Bedienperson beabsichtigten Bewegungsrichtungen des Objekts (2) zumindest teilweise entsprechen.

**Claims**

1. A system (1) for spatially moving an object (2) by means of a manipulator (3), said object (2) being motion-coupled to the manipulator (3) at least temporarily, having a motion specification means (5), which can be freely moved in space manually by an operating person at least temporarily, and which motion specification means (5) is provided for at least temporary physical coupling to the object (2) to be moved, in which coupling state the motion specification means (5) is provided for the output of motion commands to a control device (6, 6') of the manipulator (3) by the operating person, having, in the motion specification means (5), inertial sensors (7) for sensing at least orientation changes of the motion specification means (5), having an orientation-determining unit (8, 8') for continuously determining the changing orientations of the motion specification means (5) in space, wherein the control execution of at least one of the motion commands is, at least partly, dependent on the orientation of the motion specification means (5), and having a detection means (9, 9'), which sets the system (1) into a first operating mode, if the motion specification means (5) is freely moved in space manually, and said detection means (9, 9') setting the system (1) into a second operating mode, if the orientation of the motion specification means (5) is defined in consequence of mechanical contacting or coupling with the object (2), **characterized in that** in the first operating mode, the orientation-determining unit (8, 8') calculates the changing orientations of the motion specification means (5) based on signals from the inertial sensors (7) in the motion specification means (5), and in the second operating mode, the orientation-determining unit (8, 8') calculates the changing orientations of the motion specification means (5) at least at defined shortly apart points in time exclusively based on information from the control device (6) about the known positional states or positional changes of the manipulator (3) controlled by the control device (6) or the correspondingly moved object (2).

2. The system according to claim 1, **characterized in that** the detection means (9, 9') comprises a sensor (20) and the object (2) comprises a mark or identifier detectable by said sensor (20), wherein the detection means (9, 9') is designed for setting the system (1) into the second operating mode in consequence of a detection of the mark or identifier by the sensor (20).

3. The system according to claim 1 or 2, **characterized in that** a switching element (12) which can be actuated by the operator is formed on the motion specification means (5), by means of which switching element (12) it is possible to signal to the control device (6, 6') an executed coupling of the motion specification means (5) with respect to the object (2) and also a readiness to execute movements of the object (2) via the manipulator (3).

4. The system according to one of the preceding claims, **characterized in that** the detection means (9, 9') is designed for evaluating the signals from the inertial sensors (7) during a defined observation period, and that the detection means (9, 9') is adapted, in case of the signals remaining below a defined first threshold value and/or below a defined range of variation during the defined observation period with respect to the acceleration of the motion specification means (5) and/or with respect to the speed change of the motion specification means (5) calculated from this acceleration and/or with respect to the position or orientation change of the motion specification means (5), to set the system (1) into the second operating mode.

5. The system according to one of the preceding claims, **characterized in that** the motion-dependent changes in the orientation of the object (2) are determined by the manipulator (3), and that the control device (6) of the manipulator (3) transmits information about the orientation or about the continuous changes of the orientation of the object (2) to the orientation-determining unit (8, 8') or provides the orientation-determining unit (8, 8') therewith, and that the orientation-determining unit (8, 8') is adapted for determining the continuously changing orientations of the motion specification means (5) based on the information provided or transmitted by control device (6) of the manipulator (3).

6. The system according to one of the preceding claims, **characterized in that** the detection means (9, 9') is adapted for transmitting to the control device (6) or to an independent safety controller (13) of the manipulator (3) a first blocking signal which prevents the execution of motions of the manipulator (3) if the detection means (9, 9') detects that the motion specification means (5) is freely moved in space manually.

7. The system according to one of the preceding claims, **characterized in that** the orientation of the object (2) is determined by a respectively adopted pose of the manipulator (3) and the control device (6) of the manipulator (3) transmits information about the orientation or about the continuous changes of the orientation of the object (2) to the detection means (9, 9'), and that the detection means (9, 9') is adapted to compare this information about the motion of the object (2) with the motion information from the inertial sensors (7), and that the detection means (9, 9') is further adapted to set the system (1) into the first operating mode if a deviation of the acceleration or the rotational speed derived therefrom or the angular change between (i) the information from the control device (6) and (ii) the sensory information from the motion specification means (5) exceeds a defined second threshold value.

8. The system according to claim 7, **characterized in that** the detection means (9, 9') is designed for carrying out the comparison between (i) the control-side information about the motion of the object (2) and (ii) the motion information based on the inertial sensors (7) according to the amount, i.e. according to the amount of the respective parameter values.

9. The system according to claim 7, **characterized in that** the detection means (9, 9') is designed for carrying out the comparison between (i) the control-side information about the motion of the object (2) and (ii) the motion information based on the inertial sensors (7) vectorially taking into consideration the directional components of the motion information.

10. The system according to one of the preceding claims, **characterized in that** a storage unit (21, 21') with correction values accessible by the orientation-determining unit (8, 8') is provided and the orientation-determining unit (8, 8') is adapted for correcting the sensor values of the inertial sensors (7) by calculation using these correction values in the course of calculating the motion information.

11. The system according to claim 10, **characterized in that** the orientation of the object (2) is determined by the respectively adopted pose of the manipulator (3) and the control device (6) of the manipulator (3) transmits information about the orientation or about the continuous changes of the orientation of the object (2) to the orientation-determining unit (8, 8') or provides it to it, and that the orientation-determining unit (8, 8') is adapted to compare this information about the motion of the object (2) with the motion information from the inertial sensors (7), and that the orientation-determining unit (8, 8') is further designed to adapt the correction values for the calculatory correction of the sensor values of the inertial sensors (7) such that a deviation of the motion information from the sensor values corrected with the correction values compared with the motion information as a result of the information from the control device (6) of the manipulator (3) is minimized.

12. The system according to one of the preceding claims, **characterized in that** a collision detecting means is provided or the detection means (9, 9') is adapted for evaluating the signals from the inertial sensors (7) and compare them to a third threshold value, and that the collision detecting means or the detection means (9, 9') is further designed for transmitting a blocking signal to the control device (6) or to an independent safety controller (13) of the manipulators (3), said blocking signal preventing a motion of the manipulator (3) if the third threshold value is exceeded.

13. The system according to one of the preceding claims, **characterized in that** an impulse detecting means is provided or the detection means (9, 9') is adapted for evaluating the signals from the inertial sensors (7) and compare them to a fourth threshold value, and that the impulse detecting means or the detection means (9, 9') is further designed for transmitting a motion command to the control device (6) of the manipulator, by which motion command a defined limited motion of the object (2) guided by the manipulator (3) towards the detected acceleration is triggered.

14. The system according to one of the preceding claims, **characterized in that** the motion specification means (5) comprises at least one input means (14) of the type of an enabling switch (15), which input means (14) is provided for enabling motions of the manipulator (3) to be consciously initiated by the operator, and said input means (14) is adapted to generate an enabling signal and to transmit it to the control device (6) or to a safety controller (13) of the manipulator (3) as a function of its operating state.

15. The system according to one of the preceding claims, **characterized in that** the motion specification means (5) comprises a coupling device (16) which can be activated and deactivated on demand, which coupling device (16) is provided for the temporary establishment of an on-demand releasable connection with respect to the object (2) and for the transmission of forces and momentums between the object (2) and the motion specification means (5).

16. The system according to claim 15, **characterized in that** the coupling device (16) comprises a mechanical clamping or plug connection and/or a suction cup and/or a magnetic holder and/or an adhesive or bonding surface for repeated, on-demand releasable bonding to the object (2).

17. The system according to one of the preceding claims, **characterized in that** the motion specification means (5) comprises at least one input means (17) which can be actuated or influenced by the operator to trigger a motion of the manipulator (3), to which input means (17) a direction of motion with respect to a device-fixed, local coordinate system $(K_L)$ of the motion specification means (5) is assigned, wherein the system (1) is adapted to carry out, as a function of the orientation of the local coordinate system $(K_L)$ in a world coordinate system (Kw) of the manipulator (3), a conversion or transformation of this direction of motion with respect to the local coordinate system $(K_L)$ into an equivalent or equally oriented direction of motion with respect to the world coordinate system (Kw) of the manipulator (3).

18. The system according to one of the preceding claims, **characterized in that** the motion specification means (5) comprises an input element (18) by the actuation of which a change from the first into the second or from the second into the first operating mode can either be directly initiated by the operator, or by means of which input element (18) predefined threshold values for an automatic change of the operating mode can be temporarily consciously changed in such a way that this change of the operating mode takes place more quickly, or that an actuation of this input element (18) is included as additional information for a control-related plausibility check of an automatically initiated change of the operating mode.

19. The system according to one of the preceding claims, **characterized in that** the motion specification means (5) comprises a display element (19), said display element (19) being adapted for signaling to an operator whether the system (1) is in the first or in the second operating mode.

20. The system according to one of the preceding claims, **characterized in that** the motion specification means (5) can be data-technologically coupled to the control device (6) of the manipulator (3) via a wirelessly established communication link (10), in particular a radio link.

21. A method for spatially moving an object (2) by means of a manipulator (3) controlled by an electronic control device (6, 6'), in particular an industrial robot, comprising the steps:

a) establishing an at least temporary motion coupling of the object (2) to be moved with an end effector (4) of the manipulator;

b) bringing a motion specification means (5) which can be freely moved in space manually at least temporarily by an operator, with inertial sensors (7) structurally integrated therein, into a reference orientation, which reference orientation is predetermined with respect to a world coordinate system (Kw) of the manipulator (3) and is known to the control device (6, 6'), or which reference orientation can be determined by calculation by the control device (6, 6');

c) calculating a first transformation matrix for the transformation of directional vectors between a local coordinate system ($K_L$), referring to the motion specification means (5), of the motion specification means (5) aligned in reference orientation, and the world coordinate system (Kw) of the manipulator (3);

d) bringing, by the operator, the motion specification means (5) starting from its reference orientation to any position - desired by the operator - on the object (2) to be moved by the manipulator (3), wherein the first transformation matrix is updated using the sensor signals of the inertial sensors (7) according to the change in the orientation of the motion specification means (5);

e) establishing a physical coupling or a rigid motion connection between the motion specification means (5) and the object (2) to be moved by the operator;

f) providing, by the control device (6, 6') of the manipulator (3), a second transformation matrix which enables a transformation of directional vectors between the world coordinate system (Kw) of the manipulator (3) and an effector coordinate system ($K_E$) rigidly associated with the end effector (4) according to the pose of the manipulator (3) at the time of coupling;

g) determining a third transformation matrix from the first and second transformation matrix, which third transformation matrix enables a transformation of directional vectors between the local coordinate system ($K_L$) of the motion specification means (5) and the effector coordinate system ($K_E$) rigidly associated with the end effector (4);

h) continuous actuations of the motion specification means (5) by the operator in those actuating directions which correspond at least partly to the intended directions of motion of the object (2) and detection of directional information about the actuating actions of the operator continuously performed on the motion specification means (5), as well as repeated provision by the control device (6, 6') of a second transformation matrix updated in accordance with the pose of the manipulator (3) currently present at the time of provision in each case, and continuous transformation of this directional information by means of the second and third transformation matrix into the world coordinate system ($K_w$) of the manipulator (3) and initiation of motions of the manipulator (3) by its control device (6) in such a way that directions of motion of the object (2) correspond at least partly to the directions of actuation initiated by the operator on the motion specification means (5).

22. The method according to claim 21, **characterized in that** in step h) between the instants of provision of the updated second transformation matrix provided by the control device (6, 6'), an update of this second transformation matrix, or of the entirety of the second and third transformation matrix, is carried out based on an extrapolation from temporally preceding values, or based on the signals from the inertial sensors (7).

23. The method according to claim 21 or 22, **characterized by** an actuation of the motion specification means (5) by the operator by tensile, compressive, tilting or rotational loads with respect to the motion specification means (5) in those actuating directions which correspond at least partly to the directions of motions of the object (2) intended by the operator.

**Revendications**

1. Système (1) pour le déplacement dans l'espace d'un objet (2) au moyen d'un manipulateur (3), cet objet (2) étant couplé en mouvement au moins provisoirement avec le manipulateur (3), avec un moyen de spécification de mouvement (5) qui peut être déplacé librement dans l'espace manuellement au moins en deux parties par un opérateur et ce moyen de spécification de mouvement (5) étant prévu au moins en deux parties pour le couplage corporel avec l'objet (2) à déplacer, moyennant quoi, dans cet état de couplage, le moyen de spécification de mouvement (5) est prévu pour l'envoi de commandes de mouvement par l'opérateur à un dispositif de commande (6, 6') du manipulateur (3), avec des capteurs inertiels (7) dans le moyen de spécification de mouvement (5) pour la détection au moins de changements d'orientation du moyen de spécification de mouvement (5), avec une unité de détermination d'orientation (8, 8') pour la détermination en continu de l'orientation variable du moyen de spécification de mouvement (5) dans l'espace, l'exécution d'au moins une des commandes de mouvement dépendant au moins partiellement de l'orientation du moyen de spécification de mouvement (5), et avec un moyen de détection (9, 9') qui met le système (1) dans un premier mode de fonctionnement lorsque le moyen de spécification de mouvement (5) est déplacé librement à la main dans l'espace et ce moyen de détection (9, 9') met le système (1) dans un deuxième mode de fonctionnement lorsque l'orientation du moyen de spécification de mouvement (5) est définie à la suite d'un contact ou d'un couplage mécanique avec l'objet (2), **caractérisé en ce que** dans le premier mode de fonctionnement, l'unité de détermination d'orientation (8, 8') calcule les orientations variables du moyen de spécification de mouvement (5) sur la base des signaux des capteurs inertiels (7) du moyen de spécification de mouvement (5), et dans le deuxième mode de fonctionnement, l'unité de détermination d'orientation (8, 8') calcule les orientations variables du moyen de spécification de mouvement (5) au moins à des moments rapprochés définis exclusivement sur la base d'informations provenant du dispositif de commande (6) concernant les états de positions ou les changements de positions, qui lui sont connus, respectivement du manipulateur (3) contrôlé par le dispositif de commande (6) ou de l'objet (2) déplacé en conséquence.

2. Système selon la revendication 1, **caractérisé en ce que** le moyen de détection (9, 9') comprend un capteur (20) et l'objet (2) comprend un marquage ou une identification pouvant être détectée par ce capteur (20), le moyen de détection (9, 9') étant conçu pour mettre le système (1) dans le deuxième mode de fonctionnement à la suite d'une détection du marquage ou de l'identification par le capteur (20).

3. Système selon la revendication 1 ou 2, **caractérisé en ce que**, sur le moyen de spécification de mouvement (5), est prévu un élément de commutation (12) pouvant être actionné par l'opérateur, cet élément de commutation (12) permettant de signaler au dispositif de commande (6, 6') qu'un couplage du moyen de spécification de mouvement (5) par rapport à l'objet (2) est effectué et en outre que des déplacements de l'objet (2) sont prêts à être effectués par l'intermédiaire du manipulateur (3).

4. Système selon l'une des revendications précédentes, **caractérisé en ce que** le moyen de détection (9, 9') est conçu pour analyser les signaux des capteurs inertiels (7) pendant une période d'observation définie et **en ce que** le moyen de détection (9, 9') est conçu, dans le cas où ces signaux concernant l'accélération du moyen de spécification de mouvement (5) et/ou concernant la variation de vitesse, calculée à partir de cette accélération, du moyen de spécification de mouvement (5) et/ou concernant le changement de position ou d'orientation du moyen de spécification de mouvement (5) restent, pendant la période d'observation définie, en dessous d'une première valeur limite définie et/ou en dessous d'une plage de variation définie, pour mettre le système (1) dans le deuxième mode de fonctionnement.

5. Système selon l'une des revendications précédentes, **caractérisé en ce que** les variations, dues aux mouvements, de l'orientation de l'objet (2) sont imposées par le manipulateur (3) et **en ce que** le dispositif de commande (6) du manipulateur (3) transmet des informations concernant l'orientation ou concernant les variations continues de l'orientation de l'objet (2) à l'unité de détermination d'orientation (8, 8') ou les met à la disposition de l'unité de détermination d'orientation (8, 8') et **en ce que** l'unité de détermination d'orientation (8, 8') est conçue pour déterminer, dans le deuxième mode de fonctionnement, les orientations variables en continu du moyen de spécification de mouvement (5) sur la base des informations transmises ou mises à disposition par le dispositif de commande (6) du manipulateur (3).

6. Système selon l'une des revendications précédentes, **caractérisé en ce que** le moyen de détection (9, 9') est conçu pour transmettre au dispositif de commande (6) ou à une commande de sécurité autonome (13) du manipulateur (3), un premier signal de blocage qui interdit l'exécution de déplacements du manipulateur (3) lorsque le moyen de détection (9, 9') détecte que le moyen de spécification de mouvement (5) est déplacé à la main librement dans l'espace.

7. Système selon l'une des revendications précédentes, **caractérisé en ce que** l'orientation de l'objet (2) est déterminée par une posture adoptée par le manipulateur (3) et le dispositif de commande (6) du manipulateur (3) transmet des informations concernant l'orientation ou concernant les variations en continu de l'orientation de l'objet (2) au moyen de détection (9, 9') et **en ce que** le moyen de détection (9, 9') est conçu pour comparer ces informations concernant le déplacement de l'objet (2) avec les informations de mouvement provenant des capteurs inertiels (7) et **en ce que** le moyen de détection (9, 9') est en outre conçu pour mettre le système (1) dans le premier mode de fonctionnement lorsqu'un écart de l'accélération ou de la vitesse de rotation déduite à partie de celle-ci ou de la variation angulaire entre (i) les informations provenant du dispositif de commande (6) et (ii) les informations des capteurs provenant du moyen de spécification de mouvement (5) dépasse une deuxième valeur limite définie.

8. Système selon la revendication 7, **caractérisé en ce que** le moyen de détection (9, 9') est conçu pour effectuer la comparaison entre (i) les informations provenant de la commande concernant le déplacement de l'objet (2) et (ii) les informations de mouvement basées sur les capteurs inertiels (7), sur la base de la valeur absolue, donc sur la base de la valeur absolue des différentes valeurs de paramètres.

9. Système selon la revendication 7, **caractérisé en ce que** le moyen de détection (9, 9') est conçu pour effectuer la comparaison entre (i) les informations provenant de la commande concernant le déplacement de l'objet (2) et (ii) les informations de mouvement basées sur les capteurs inertiels (7) de manière vectorielle en tenant compte des composantes de direction des informations de mouvement.

10. Système selon l'une des revendications précédentes, **caractérisé en ce qu'**une unité d'enregistrement (21, 21') est prévue avec des valeurs de correction accessibles pour l'unité de détermination d'orientation (8, 8') et l'unité de détermination d'orientation (8, 8') est conçue pour corriger par calcul les valeurs des capteurs inertiels (7) lors du calcul des informations de mouvement avec ces valeurs de correction.

11. Système selon la revendication 10, **caractérisé en ce que** l'orientation de l'objet (2) est déterminé par la posture adoptée par le manipulateur (3) et le dispositif de commande (6) du manipulateur (3) transmet des informations concernant l'orientation ou concernant les variations en continu de l'orientation de l'objet (2) à l'unité de détermination d'orientation (8, 8') ou les lui met à disposition et **en ce que** l'unité de détermination d'orientation (8, 8') est conçue pour comparer des informations concernant le mouvement de l'objet (2) avec les informations de mouvement provenant des capteurs inertiels (7) et **en ce que** l'unité de détermination d'orientation (8, 8') est en outre conçue pour adapter les valeurs de correction pour la correction par calcul des valeurs des capteurs inertiels (7) de façon à ce qu'un écart entre les informations de mouvement provenant des valeurs de capteurs corrigées avec les valeurs de correction et les informations de mouvement provenant des informations du dispositif de commande (6) du manipulateur (3) soit minimisé.

12. Système selon l'une des revendications précédentes, **caractérisé en ce qu'**un moyen de détection de collision est prévu ou le moyen de détection (9, 9') est conçu pour analyser les signaux des capteurs inertiels (7) et les comparer avec une troisième valeur limite et **en ce que** le moyen de détection de collision ou le moyen de détection (9, 9') est en outre conçu pour transmettre un signal de blocage au dispositif de commande (6) ou à une commande de sécurité autonome (13) du manipulateur (3), ce signal de blocage interdisant le déplacement du manipulateur (3) lorsque la troisième valeur limite est dépassée.

13. Système selon l'une des revendications précédentes, **caractérisé en ce qu'**un moyen de détection d'impulsions est prévu ou le moyen de détection (9, 9') est conçu pour analyser les signaux des capteurs inertiels (7) et les comparer avec une quatrième valeur limite et **en ce que** le moyen de détection d'impulsions ou le moyen de détection (9, 9') est en outre conçu pour transmettre une commande de mouvement au dispositif de commande (6) du manipulateur, cette commande de mouvement permettant de déclencher un mouvement limité de manière définie de l'objet (2) guidé par le manipulateur (3) en direction de l'accélération constatée.

14. Système selon l'une des revendications précédentes, **caractérisé en ce qu'**un moyen de spécification de mouvement (5) comprend au moins un moyen d'entrée (14) sous la forme d'un bouton de validation (15), ce moyen d'entrée (14) étant conçu pour un déverrouillage conscient initié par l'opérateur des mouvements du manipulateur (3) et ce moyen d'entrée (14) est conçu pour la génération, en fonction de son état d'actionnement, d'un signal de déverrouillage et pour sa transmission au dispositif de commande (6) ou à une commande de sécurité (13) du manipulateur (3).

15. Système selon l'une des revendications précédentes, **caractérisé en ce qu'**un moyen de spécification de mouvement (5) comprend un dispositif de couplage (16) pouvant être activé ou désactivé au besoin, ce dispositif de couplage (16) à étant prévu pour l'établissement en deux parties d'une liaison amovible si nécessaire par rapport à l'objet (2) et pour la transmission de forces et de couples entre l'objet (2) et le moyen de spécification de mouvement (5).

16. Système selon la revendication 15, **caractérisé en ce que** le dispositif de couplage (16) comprend une liaison de serrage ou d'emboîtement et/ou une ventouse et/ou un support magnétique et/ou une surface d'adhérence ou de collage pour un collage à plusieurs reprises, amovible si nécessaire, sur l'objet (2).

17. Système selon l'une des revendications précédentes, **caractérisé en ce qu'**un moyen de spécification de mouvement (5) comprend au moins un moyen d'entrée (17) pouvant être actionné ou contrôlé par l'opérateur, pour le déclenchement d'un mouvement du manipulateur (3), une direction de mouvement par rapport à système de coordonnées local solidaire de l'appareil ($K_L$) du moyen de spécification de mouvement (5) correspondant à ce moyen d'entrée (17), le système (1) étant conçu pour exécuter, en fonction de l'orientation du système de coordonnées local ($K_L$) dans un système de coordonnées universel (Kw) du manipulateur (3), une conversion ou une transformation de cette direction de mouvement par rapport au système de coordonnées local ($K_L$) en une direction de mouvement, équivalente ou de même orientation, par rapport au système de coordonnées universel (Kw) du manipulateur (3).

18. Système selon l'une des revendications précédentes, **caractérisé en ce qu'**un moyen de spécification de mouvement (5) comprend un élément d'entrée (18), grâce à l'actionnement duquel, il est possible d'obtenir un passage du premier au deuxième ou du deuxième au premier mode de fonctionnement directement par l'intermédiaire de l'opérateur, ou l'élément d'actionnement (18) permet de modifier de manière consciente des valeurs limites prédéfinies pour un changement automatique de mode de fonctionnement, de façon à ce que ce changement de mode de fonctionnement ait lieu plus rapidement ou à ce qu'un actionnement de cet élément d'actionnement (18) soit pris en compte en tant qu'information supplémentaire pour une vérification de la plausibilité technique d'un changement automatique de mode de fonctionnement.

19. Système selon l'une des revendications précédentes, **caractérisé en ce qu'**un moyen de spécification de mouvement (5) comprend un élément d'affichage (19), cet élément d'affichage (19) étant conçu pour signaler à un opérateur si le système (1) se trouve dans le premier ou dans le deuxième mode de fonctionnement.

20. Système selon l'une des revendications précédentes, **caractérisé en ce qu'**un moyen de spécification de mouvement (5) peut être couplé, à l'aide de données, par l'intermédiaire d'une liaison de communication sans fil (10), plus particulièrement une liaison radio, avec le dispositif de commande (6) du manipulateur (3).

21. Procédé pour le déplacement dans l'espace d'un objet (2) au moyen d'un manipulateur (3) contrôlé par un dispositif de commande électronique (6, 6'), plus particulièrement un robot industriel, comprenant les étapes suivantes :

a) établissement d'un couplage de mouvement en au moins deux parties de l'objet (2) à déplacer avec un effecteur d'extrémité (4) du manipulateur ;

b) passage d'un moyen de spécification de mouvement (5) pouvant être déplacé à la main librement dans l'espace, au moins en deux parties, avec des capteurs inertiels (7) intégrés, dans une orientation de référence, cette orientation de référence étant prédéterminée par rapport à un système de coordonnées universel (Kw) du manipulateur (3) et étant connue du dispositif de commande (6, 6') ou cette orientation de référence pouvant être déduite par calcul par le dispositif de commande (6, 6') ;

c) calcul d'une première matrice de transformation pour la transformation de vecteurs de direction entre un système de coordonnées local ($K_L$), lié au moyen de spécification de mouvement (5), du moyen de spécification de mouvement (5) orienté dans l'orientation de référence et le système de coordonnées universel (Kw) du manipulateur (3) ;

d) passage du moyen de spécification de mouvement (5), par l'opérateur, de son orientation de référence vers un point quelconque souhaité par l'opérateur sur l'objet (2) à déplacer par le manipulateur (3), la première matrice de transformation étant actualisée à l'aide des signaux des capteurs inertiels (7) en fonction de la variation de l'orientation du moyen de spécification de mouvement (5) ;

e) établissement d'un couplage corporel respectivement d'une liaison de mouvement rigide entre le moyen de spécification de mouvement (5) et l'objet à déplacer (2) par l'opérateur ;

f) mise à disposition d'une deuxième matrice de transformation par le dispositif de commande (6, 6') du manipulateur (3), qui permet une transformation des vecteurs de direction entre le système de coordonnées universel (Kw) du manipulateur (3) et un système de coordonnées d'effecteur ($K_E$) associé de manière rigide avec l'effecteur d'extrémité (4), en fonction de la posture du manipulateur (3) au moment du couplage ;

g) détermination d'une troisième matrice de transformation à partir des première et deuxième matrices de transformation, cette troisième matrice de transformation permettant une transformation des vecteurs de direction entre le système de coordonnées local ($K_L$) du moyen de spécification de mouvement (5) et le système de coordonnées d'effecteur ($K_E$) associé de manière rigide avec l'effecteur d'extrémité (4) ;

h) actionnements en continu du moyen de spécification de mouvement (5) par l'opérateur dans les directions d'actionnement qui correspondent au moins partiellement aux directions de mouvements souhaitées de l'objet (2) et détection d'informations de direction par l'intermédiaire des actions effectuées en continu par l'opérateur sur le moyen de spécification de mouvement (5), ainsi qu'une mise à disposition, de manière répétitive, par le dispositif de commande (6, 6') d'une deuxième matrice de transformation actualisée selon la posture actuelle, existant au moment de la mise à disposition, du manipulateur (3) et transformation en continu de ces informations de direction au moyen des deuxième et troisième matrices de transformation dans le système de coordonnées universel (Kw) du manipulateur (3) et exécution de mouvements du manipulateur (3) à l'aide de son dispositif de commande (6), de façon à ce que les directions de mouvement de l'objet (2) correspondent au moins partiellement aux directions d'actionnement exécutées par l'opérateur sur le moyen de spécification de mouvement (5).

**22.** Procédé selon la revendication 21, **caractérisé en ce que**, à l'étape h), entre les moments de mise à disposition de la deuxième matrice de transformation actualisée mise à disposition par le dispositif de commande (6, 6'), une actualisation de cette deuxième matrice de transformation ou de l'ensemble des deuxième et troisième matrices de transformation, a lieu sur la base d'une extrapolation de valeurs précédentes ou sur la base des signaux des capteurs inertiels (7).

**23.** Procédé selon la revendication 21 ou 22, **caractérisé par** un actionnement du moyen de spécification de mouvement (5) par l'opérateur par des sollicitations en traction, pression, basculement ou rotation par rapport au moyen de spécification de mouvement (5) dans les directions d'actionnement qui correspondent au moins partiellement aux directions de mouvements de l'objet (2) visées par l'opérateur.

Fig.1

Fig.2

**IN DER BESCHREIBUNG AUFGEFÜHRTE DOKUMENTE**

**In der Beschreibung aufgeführte Patentdokumente**

- EP 1525954 A2
- EP 2194434 A1
- EP 2580027 A1
- WO 2011153569 A1
- DE 102009012219 A
- DE 102009012219 A1
- DE 102014004919 A1